# EUROPÄISCHE PATENTSCHRIFT

(11) **EP 2 223 046 B1**
(45) Veröffentlichungstag und Bekanntmachung des Hinweises auf die Patenterteilung: **12.08.2015**
(21) Anmeldenummer: 08848827.5
(22) Anmeldetag: 12.11.2008
(51) Int. Cl.: G01C 21/36, G10L 15/26, B60R 16/037, G06F 3/048, G10L 15/22, G06F 3/0488, G06F 3/038, G06F 3/044

(54) **MULTIMODALE BENUTZERSCHNITTSTELLE EINES FAHRERASSISTENZSYSTEMS ZUR EINGABE UND PRÄSENTATION VON INFORMATIONEN**
MULTIMODE USER INTERFACE OF A DRIVER ASSISTANCE SYSTEM FOR INPUTTING AND PRESENTATION OF INFORMATION
INTERFACE UTILISATEUR MULTIMODALE D'UN SYSTÈME D'ASSISTANCE À LA CONDUITE POUR LA SAISIE ET LA PRÉSENTATION D'INFORMATIONS

(30) Priorität: 12.11.2007 DE 102007053779; 15.10.2008 DE 102008051757; 15.10.2008 DE 102008051756
(43) Veröffentlichungstag der Anmeldung: 01.09.2010
(73) Patentinhaber: Volkswagen Aktiengesellschaft, 38440 Wolfsburg (DE)
(72) Erfinder: WÄLLER, Christoph, 38102 Braunschweig (DE); NEUGEBAUER, Moritz, 10439 Berlin (DE); FABIAN, Thomas, 31139 Hildesheim (DE); WEHLING, Ulrike, 38104 Braunschweig (DE); HORNA, Günter, 85049 Ingolstadt (DE); MISSALL, Markus, 38102 Braunschweig (DE)
(86) Internationale Anmeldenummer: PCT/EP2008/009535
(87) Internationale Veröffentlichungsnummer: WO 2009/062677

(56) Entgegenhaltungen:
- EP-A- 0 939 534
- EP-A- 1 168 302
- EP-A- 1 555 652
- WO-A-2006/086511

## Beschreibung

Die Erfindung betrifft ein Verfahren zur multimodalen Informationseingabe und Anpassung der Informationsanzeige, insbesondere eines Fahrerassistenzsystems eines Kraftfahrzeuges, sowie eine zur Durchführung des Verfahrens vorgesehene Systemarchitektur.

Angesichts stetig steigender Funktionsumfänge von Fahrerinformations- und Fahrerassistenzsystemen muss in Zukunft die Mensch-Maschine-Schnittstelle (MMI) mehr denn je dafür Sorge tragen Dauer und (gefühlte) Komplexität von Bedienvorgängen zu reduzieren. Zukünftige Mensch-Maschine-Schnittstellen (MMI's) müssen in der Lage sein, eine steigende Anzahl an Fahrerinformations- und Fahrerassistenzfunktionen für den Nutzer nachvollziehbar und bedienbar zu integrieren und gleichzeitig die (gefühlte) Komplexität und die Dauer von einzelnen Bedienvorgängen zu reduzieren.

Zur Optimierung der Informationseingabe können synergistisch-multimodale Schnittstellen einen wichtigen Beitrag hierzu leisten. Solche Schnittstellen sind grundsätzlich in "Nigay, L. and Coutaz, J. (1993). A design space for multimodal systems: concurrent processing and data fusion. In CHI '93: Proceedings of the SIGCHI conference on Human factors in computing systems, pages 172-178, New York, NY, USA. ACM Press" bereits beschrieben worden. Multimodale Eingaben sind bereits heute im Fahrzeug möglich - der Nutzer kann zur Bedienung einer Funktion zwischen mehreren alternativen Kommunikationsmodalitäten (zum Beispiel Sprache oder manuelle Eingabe) wählen. Eine synergistische beziehungsweise alternierende Multimodalität ermöglicht eine Steigerung von Effizienz und Komfort, da über mehrere Modalitäten getätigte Eingaben zusammenhängend interpretiert werden. Dies trägt zu einer "natürlicheren" (an die Mensch-Mensch-Kommunikation angelehnten) Kommunikation bei.

Multimodale Bedienkonzepte sind z.B. aus der US 2005/0197843 A1 und US 2003/0093419 A1 bekannt.

Im Bereich der Anzeige von Informationsinhalten und Bedienoberflächen bergen situationsadaptive Benutzerschnittstellen großes Potential, die verschiedene Parameter der aktuellen Nutzungssituation - insbesondere die Bedienintention und das Bedienziel des Nutzers - erfassen und daraus situationsadäquate Maßnahmen zur Anpassung der Bedienoberfläche ableiten.

Solche Systeme beobachten die Handlungen des Nutzers, modellieren die Nutzerinteressen und antizipieren so Nutzerwünsche und -aktionen.

Das technische System "Fahrzeug" und sein spezifischer Nutzungskontext bieten hierzu im Gegensatz zu vielen anderen Anwendungsgebieten gute technische Voraussetzungen. Im Vergleich zu anderen Systemen existiert im Fahrzeug eine geringe und klar definierte Anzahl an Interaktionsmöglichkeiten, wodurch eine systemseitige Antizipation des Bedienziels besser erreicht werden kann.

Die EP 1 555 652 A1 beschreibt ein Verfahren einer multimodalen Mensch-Maschine-Schnittstelle für elektronische Geräte, insbesondere für den Einsatz in einem Fahrzeug. Um eine dedizierte sogenannte "Push-To-Talk-Taste" zu vermeiden, wird vorgeschlagen, einen Spracherkenner bei der haptischen Bedienung von Bedienschaltern oder-knöpfen zu aktivieren. Dabei kann ein für den jeweiligen Bedienschalter oder für das dazugehörige Gerät vorbestimmtes Vokabular aktiviert werden, um den Speicherplatz zu optimieren oder die Reaktionsgeschwindigkeit des Gerätes zu erhöhen. Zu der Vielzahl der Anwendungen zählen insbesondere das Autoradio und ein Navigationssystem, dessen Ausgaben auf einem Multimediabildschirm ausgegeben werden können.

Der Erfindung liegt die Aufgabe zugrunde die bisherigen Kommunikationsmodelle hinsichtlich der Kommunikationsmöglichkeiten zwischen Mensch und Maschine noch weiter zu verbessern und dafür das Kommunikationsmöglichkeiten bietende Verfahren und das dazu notwendige System zur Verwirklichung einer schnelleren und intuitiveren Bedienung einer Mensch-Maschine-Schnittstelle bereitzustellen.

Erfindungsgemäß wird diese Aufgabe durch ein Verfahren mit den Merkmalen des Anspruchs 1 und eine Systemarchitektur zur multimodalen Informationseingabe und Anpassung einer Anzeige mit den Merkmalen des Anspruchs 13 gelöst.

Die nachfolgende Darlegung stellt ein Verfahren zur multimodalen Informationseingabe und Anpassung der Informationsanzeige und eine Systemarchitektur für eine adaptive, multimodale Benutzerschnittstelle vor. Das Verfahren und die Systemarchitektur vereinfachen die Bedienung zukünftiger automotiver Systeme.

Durch eine synergistisch-multimodale Informationseingabe und eine automatische Anpassung der Informationsanzeige können die jeweiligen Benutzungssituationen leichter und umfassender erfasst werden.

Typische Anwendungsfälle für die Interaktionstechniken werden exemplarisch anhand der Interaktion mit Menüs erläutert. Hierzu gehört beispielsweise
- die Zuweisung von Bedienfunktionen, wie Bewegen - Zoomen, Scrollen, An/Aus, Abbruch und ähnliches, eines Monitors oder von auf dem Monitor gewünschten Bedienfunktionen oder
- die Menüauswahlfunktionen innerhalb eines übergeordneten obersten Auswahlmenüs oder
- Musikauswahlfunktionen innerhalb eines gewählten "Musikauswahl-Menüs" oder
- die Routenplanungsfunktionen innerhalb eines gewählten "Routenplanungs-Menüs" oder
- Kommunikationsfunktionen (zum Beispiel Telefon, Internet) innerhalb eines gewählten "Kommunikations-Menüs" oder
- POI-Auswahl-Funktionen innerhalb eines "POI-Auswahl-Menüs" oder
- Routenplanungsfunktionen und/oder
- Kommunikationsfunktionen und/oder
- POI-Auswahl-Funktionen innerhalb eines mit einer Navigationskarte hinterlegten "Navigationskarten-Menüs".

Zudem wird eine skalierbare Systemarchitektur für eine adaptive, multimodale Benutzerschnittstelle vorgestellt. Diese erlaubt multimodale Eingabemöglichkeiten, welche über die heute in Serie zu findenden Eingabemöglichkeiten hinausgehen. Sie umfasst insbesondere Systemmodule zur separaten Auswertung von Eingabesignalen.

Die Erfindung geht von einem Verfahren aus, mittels dem multimodal Informationen eingegeben werden können, wobei sich je nach der Informationseingabe die entsprechenden Informationsanzeigen anpassen. Für Kraftfahrzeuge ist dieses Verfahren insbesondere für Fahrerassistenzsysteme von Bedeutung. Bisher wurden zumeist Eingabesignale unterschiedlicher Modalitäten erfasst und einem Erfassungsmodul zugeführt. Als Eingabesignale unterschiedlicher Modalitäten entgegennehmendes Eingabemodul dient ein Anzeige- und Bedienelement beispielsweise eine herkömmliches Display mit zugehörigen Bedienelementen oder ein Touchdisplay, welches zumeist zusätzlich noch weitere notwendige Bedienelemente aufweist. Dadurch wird durch Bedienung der Bedienelemente und/oder durch Berührung des Touchdisplays/Touchscreens eine bestimmte Informationseingabe ermöglicht beziehungsweise es kann eine Anpassung einer Informationsanzeige vorgenommen werden.

Zumeist sind als Eingabesignale ferner durch die Gestik bestimmte Bedienhandlungen nutzbar, indem beispielsweise eine kapazitiv angeordnete Sensorik angeordnet wird, die eine solche berührungslose Erfassung von Eingabesignalen ermöglicht.

Diese Modalitäten, die einfache haptische Bedienhandlung an Bedienelementen und/oder die haptische "Touch-Bedienhandlung" und/oder die gestische "Gestik-Bedienhandlung", werden mit einem Spracherkenner zur Spracherkennung kombiniert.

Die Erfindung geht von einem Verfahren zur multimodalen Informationseingabe und/oder Anpassung der Anzeige einer Anzeige- und Bedieneinrichtung in einem Kraftfahrzeug aus, welches Eingabesignale unterschiedlicher Modalität erfasst, die über die mindestens eine Bedieneinrichtung und einen Spracherkenner zugeführt werden, wodurch als Ausgabesignal eine gewünschte Funktion und/oder Anzeige ausgelöst wird, die auf der Anzeige- und Bedieneinrichtung angezeigt und/oder per Sprachausgabe ausgegeben wird.

Gemäß der Erfindung führen gestische Eingabesignale oder eine Kombination aus haptischen und gestischen Eingabesignalen auf oder an der Anzeige- und Bedieneinrichtung zu einer Auswahl eines zur Interaktion vorgesehenen Objektes und zur Aktivierung des Spracherkenners und mit der Auswahl des Objektes und/oder Aktivierung des Spracherkenners in Abhängigkeit des ausgewählten Objektes erfolgt eine Einschränkung des zur Interaktion vorgesehenen Vokabulars, wonach dem ausgewählten Objekt als Informationseingabe und/oder zur Anpassung der Anzeige über den Spracherkenner ein zu dem ausgewählten Objekt zugehöriger Sprachbefehl des eingeschränkten Vokabulars hinzugefügt wird.

Das Verfahren bevorzugt in einer ersten Ausführungsvariante zur Erfassung der Eingabesignale die Nutzung einer ersten Modalität in Form von haptischen Bedienhandlungen des Nutzers am Anzeige- und Bedienelement, wie beispielsweise Drehen, Drücken, Berühren und/oder Schalten von Bedienelementen am Erfassungsmodul.

In einer zweiten erfindungsgemäßen Ausführungsvariante wird bevorzugt zur Erfassung der Eingabesignale eine zweite Modalität benutzt, bei der gestische Bedienhandlungen [Gestik] - in Form von Bewegungen - des Nutzers erkannt werden.

Als dritte Modalität wird in Kombination mit der ersten und/oder zweiten Modalität die Spracherkennung genutzt, also die Sprache des Nutzers zur Durchführung des Verfahrens eingesetzt.

Erfindungsgemäß werden beide Ausführungsvarianten, die zur Erfassung der Eingabesignale dienen, auch zur Aktivierung des Spracherkenners genutzt.

Es kann vorgesehen sein, dass der Spracherkenner des Sprachdialogsystems durch eine haptische Bedienhandlung, beispielsweise eine "Longpress"-Berührung und/oder eine "Doppelklick"-Berührung, und/oder eine "Drag-Geste" und/oder einen "2-Finger-Touch", aktiviert wird.

Es ist ferner erfindungsgemäß vorgesehen, dass der Spracherkenner des Sprachdialogsystems bereits zum Zeitpunkt des Erkennens einer "allgemeinen" gestischen Bedienhandlung am Erfassungsmodul automatisch aktiviert wird.

Beide Aktivierungsarten können kombiniert ausgeführt werden.

Durch diese erfindungsgemäße Lösung entfällt die bisher aus dem Stand der Technik bekannte, den Spracherkenner aktivierende "Push-to-Talk"-Taste.

In einer weiteren bevorzugten Ausgestaltung ist unabhängig von der haptischen und/oder gestischen Aktivierung des Spracherkenners nach der Aktivierung für eine vorgebbare, definierte Zeitspanne aktiv, wobei dann nur innerhalb dieser vorgegebenen Zeitspanne von dem Nutzer ein Sprachbefehl hinzugefügt werden kann.

Bevorzugt ist der hinzugefügte Sprachbefehl eine Ein- oder Mehrwort-Vokabel.

In einer ersten Ausführungsform der Interaktion von gestischen und/oder haptischen Eingabesignalen und der Spracheingabe wird in einer sogenannten "Anzeigeobjekt/Sprach-Interaktion" zu dem durch die jeweilige Bedienhandlung ausgewählten Objekt ein Sprachbefehl in Form einer Einwortvokabel oder Mehrwortvokabel - ausschließlich mittels eines und/oder mehrerer "Verben" - aus einem vorgegebenen Vokabular hinzugefügt, um eine einfache und intuitive multimodale Bedienung zur Erzeugung des Ausgabesignals und der damit verbundenen veränderten Funktion und Anzeige des Anzeigeobjektes am Ausgabemodul zu generieren.

In einer zweiten Ausführungsform der Interaktion von gestischen und/oder haptischen Eingabesignalen und der Spracheingabe wird in einer sogenannten "Anzeigeobjekt-Kontext/Sprach-Interaktion"zu dem durch die jeweilige Bedienhandlung ausgewählten Objekt ein "kontextbezogener" Sprachbefehl eines vorgegebenen "kontextspezifischen" Vokabulars in Form einer Einwortvokabel oder Mehrwortvokabel hinzugefügt, um ebenfalls eine einfache und intuitive multimodale Bedienung zur Erzeugung des Ausgabesignals und der damit verbundenen veränderten Funktion und/oder Anzeige des Objektes am Anzeige- und Bedienelement zu generieren.

Es ist bevorzugt vorgesehen, dass der Spracherkenner des Sprachdialogsystems nach dessen Aktivierung nur für eine vorgebbare, definierte Zeitspanne aktiv ist, innerhalb der ein Sprachbefehl von dem Nutzer hinzugefügt werden kann, wobei die Aktivierung beziehungsweise Deaktivierung des Spracherkenners durch eine grafische Anzeige - "grafischer Feedback"- in einem dafür vorgesehenen Bereich am Anzeige- und Bedienelement (abseits des Interaktionsobjektes) selbst erfolgt.

Bevorzugt ist, dass der jeweilige Sprachbefehl selbst in bevorzugter Ausgestaltung in beiden Ausführungsformen in schriftlicher Form unmittelbar nach dessen Erkennung durch den Spracherkenner auf dem Anzeige- und Bedienelement für eine vorgebbare, definierte Zeitspanne eingeblendet.

Ebenfalls für beide Ausführungsformen bevorzugt ist, dass die Aktivierung des Spracherkenners über eine grafische Anzeige am Anzeige- und Bedienelement und/oder über ein akustisches Signal des Anzeige- und Bedienelementes signalisiert wird, wobei ferner bevorzugt die vorgebbare, verbleibende Dauer zur Eingabe des Sprachbefehls nach der Aktivierung des Spracherkenners angezeigt wird.

Schließlich ist für beide Ausführungsformen vorgesehen, bei Eingabe eines Sprachbefehls, der nicht zum festgelegten, zur Interaktion vorgesehenen Anzeigeobjekt passt, eine grafische und/oder akustische Meldung zu generieren und über das Anzeige- und Bedienelement oder über ein Sprachausgabegerät des Sprachdialogsystems auszugeben.

Es ist ferner ebenfalls für beide Ausführungsformen bevorzugt vorgesehen, dass der Spracherkenner des Sprachdialogsystems nach dessen Aktivierung nur für eine vorgebbare, definierte Zeitspanne aktiv ist, innerhalb der ein Sprachbefehl von dem Nutzer hinzugefügt werden kann, wobei die Aktivierung beziehungsweise Deaktivierung des Spracherkenners durch eine grafische Anzeige - "grafischer Feedback"- nicht abseits des Interaktionsobjektes am Anzeige- und Bedienelement, sondern am zur Interaktion vorgesehenen Objektes selbst erfolgt. Diese Vorgehensweise bei der ein Status des Spracherkenners in unterschiedlicher Weise anzeigbar ist wird in dem Ausführungsbeispielen noch näher erläutert.

Ferner bevorzugt ist innerhalb der das Verfahren unterstützenden Systemarchitektur ein Präsentationsmanager ausgebildet, der in Abhängigkeit der von einem vorgeschalteten Informationsmanager erhaltenen Eingabesignale der verschiedenen Modalitäten über die Art der Ausgabe und die Wahl der geeigneten Präsentationsmethode am Anzeige- und Bedienelement entscheidet.

In einer weiteren Ausgestaltung der Erfindung wird die Präsentationsmethode in Abhängigkeit der an den Präsentationsmanager übergebenen Eingabesignale adaptiert.

Es erfolgt eine Veränderung der Präsentation durch Anpassung der grafischen Oberfläche, durch adäquate Auswahl der Anzeigeinhalte und/oder durch kommunikationsspezifische Auswahl des Ausgabemediums beziehungsweise Ausgabezeitpunktes.

Gemäß dem erfindungsgemäßen Verfahren kann ferner über das als Erfassungsmodul dienende Anzeige- und Bedienelement eine Bedienintention, insbesondere der gestischen zweiten Modalität [Gestik], in Abhängigkeit von der Entfernung einer Bedienbewegung vom Anzeige- und Bedienelement eingegeben werden und ein Eingabesignal erfasst werden, so dass in Abhängigkeit der gestischen Bedienhandlung ein situativer Wechsel zwischen einem Anzeigemodus und mindestens einem Bedienmodus des Anzeige- und Bedienelement realisiert wird.

In bevorzugter Ausgestaltung ist das Anzeige- und Bedienelement der Systemarchitektur zunächst in der Lage festzustellen, ob eine Bedienbewegung überhaupt vorliegt. Liegt keine Bedienbewegung vor, so wird dies von dem Informationsmanager des Systems erkannt und verarbeitet, wobei der Präsentationsmanager des Ausgabemoduls hinsichtlich der Darstellung und Anzeige von Informationsgehalten zu einem "Anzeigemodus" hin optimiert wird.

Wird von dem Anzeige- und Bedienelement eine Bedienbewegung im Bereich d ≥ einem vorgebbaren Abstand, insbesondere d ≥ 5 cm, detektiert, so erkennt der Informationsmanager eine "allgemeine" Bedienintention, wobei der Präsentationsmanager das Ausgabemodul im gesamten Anzeigebereich zur verbesserten Bedienung zu einem "ersten Bedienmodus" hin optimiert.

Erkennt das Anzeige- und Bedienelement eine Bedienbewegung im Bereich d < einem vorgebbaren Abstand, insbesondere d < 5 cm, so hat der Informationsmanager eine "potentiell anvisierte" Bedienintention eines Bedienziels als Anzeigeobjekt detektiert, wobei der Präsentationsmanager das Ausgabemodul zur verbesserten Bedienung der "potentiell anvisierten" Bedienziele im anvisierten Anzeigebereich zu einem "zweiten Bedienmodus" hin optimiert.

In bevorzugter Ausgestaltung der Erfindung erfolgt die Optimierung der Bedienmodi durch Skalierung, Einblendung, Zoomen des vorgebbaren Anzeigebereiches, wodurch Bedienflächen mit besserer und einfacherer Bedienbarkeit erzeugt werden.

In bevorzugter Ausgestaltung wird der Spracherkenner des Sprachdialogsystems zum Zeitpunkt des Erkennens der allgemeinen Bedienintention, wie vorne beschrieben, bereits automatisch gestartet.

In bevorzugter Ausgestaltung werden die nacheinander oder parallel vorgenommenen Eingabesignale der verschiedenen Modalitäten zur Verifizierung der Eingabesignale untereinander genutzt.

Schließlich zeichnet sich das Verfahren dadurch aus, dass in Abhängigkeit der jeweiligen auch zeitlich überlagerbaren Eingabesignale entsprechende Ausgabesignale erzeugt werden, die zur Darstellung und Bedienung von Bedienebenen und zur Auswahl verschiedener, mit mehreren Bedienebenen versehenen Systeme dienen. Als Applikationen sind Funktionen eines Navigations-Systems und eines Entertainment-Systems mit verschiedenen, innerhalb des jeweiligen Systems durchführbaren Funktionsinhalten anzusehen.

Dem Verfahren ist also erfindungsgemäß eine Systemarchitektur zur multimodalen Informationseingabe und Anpassung einer Informationsanzeige zugeordnet, welche derart aufgebaut ist, dass Eingabesignale über eine der jeweiligen Modalität zugeordnete Benutzerschnittstelle über ein Anzeige- und Bedienelement und einem Spracherkenner zuführbar sind.

Das System zeichnet sich dadurch aus, dass die Eingabesignale der verschiedenen Modalitäten synergistisch von einem Informationsmanager erfassbar sind und der Präsentationsmanager ausgehend von den erhaltenen Eingabesignalen des Informationsmanagers ansteuerbar ist, und der Anzeige- und Bedieneinrichtung und/oder dem Spracherkenner in Abhängigkeit der Eingabesignale vorbereitete Ausgabesignale bereitstellt.

Das Anzeige- und Bedienelement ist je nach Modalität ein herkömmliches Display mit zugehörigen Bedienelementen oder ein Touchscreen, der in einer Ausgestaltung mit einem zugehörigen kapazitiven sensorischen System ausgestattet ist, dem zusätzlich weitere Bedienelemente zugeordnet sein können.

Bevorzugt ist zur Auswertung der Eingabesignale der Informationsmanager angeordnet, welcher die Eingabesignale einem Präsentationsmanager übergibt, so dass die Ausgabesignale des Informationsmanagers von einem Präsentationsmanager zur Präsentation vorbereitet dem Anzeige- und Bedienelement zur Anzeige bereitstellbar sind.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figuren 1A bis 1C: eine Adaption der Anzeige bei Annäherung einer Bedienhand innerhalb eines Navigationskarten-Menüs;
- Figuren 2A bis 2C: den Bedienablauf einer synergistisch-multimodalen POI Suche innerhalb des Navigationskarten-Menüs;
- Figuren 3A bis 3C: den Bedienablauf einer synergistisch-multimodalen Interaktion mit einem POI innerhalb des Navigationskarten-Menüs;
- Figuren 4A bis 4B: den Bedienablauf einer synergistisch-multimodalen Interaktion mit einem POI innerhalb des Navigationskarten-Menüs;
- Figuren 5A bis 5C: den Bedienablauf einer synergistisch-multimodalen Interaktion mit einem POI innerhalb des Navigationskarten-Menüs;
- Figuren 6A bis 6B: den Bedienablauf einer synergistisch-multimodalen Menüfunktion innerhalb eines übergeordneten, obersten Auswahlmenüs;
- Figuren 7A bis 7B: den Bedienablauf einer synergistisch-multimodalen Musikauswahlfunktion innerhalb eines Musikauswahl-Menüs;
- Figuren 8A bis 8B: den Bedienablauf einer synergistisch-multimodalen Routenplanungsfunktion innerhalb eines Routenplanungsmenüs und
- Figur 9: den Bedienablauf einer synergistisch-multimodalen Bedienfunktion;
- Figur 10: Systemzustände bei definierter Annäherung der Bedienhand an ein Touchscreen;
- Figur 11: grafischer Dialog zur Statusanzeige des Spracherkenners am ausgewählten Interaktionsobjekt am Beispiel einer Playlist;
- Figur 12: grafischer Dialog zur Statusanzeige des Spracherkenners am ausgewählten Interaktionsobjekt am Beispiel eines Media-Player;
- Figur 13: grafischer Dialog zur Statusanzeige des Spracherkenners am ausgewählten Interaktionsobjekt am Beispiel einer POI-Auswahl auf einem Navigationsdisplay;
- Figur 14: grafischer Dialog zur Statusanzeige des Spracherkenners am ausgewählten Interaktionsobjekt am Beispiel eines einzelnen POI auf einem Navigationsdisplay.

Voraussetzung für die jeweilige Interaktion ist zunächst die Art und Weise der Festlegung des zur Interaktion vorgesehenen Objektes. Als Objekt werden einzelne Objekte als auch Bereiche verstanden mit denen beziehungsweise in denen die Interaktion stattfindet.

Diese Festlegung erfolgt in der ersten Ausführungsvariante durch Erfassung der Eingabesignale unter Nutzung einer ersten Modalität M1 in Form von haptischen Bedienhandlungen des Nutzers am Anzeige- und Bedienelement, wie beispielsweise Drehen, Drücken, Berühren, Schalten von Bedienelementen.

In einer zweiten erfindungsgemäßen Ausführungsvariante erfolgt die Festlegung des zur Interaktion vorgesehenen Objektes durch Erfassung der Eingabesignale durch eine zweite Modalität M2, bei der gestische Bedienhandlungen - in Form von Bewegungen - des Nutzers 10 erkannt und ausgewertet werden.

Voraussetzung für die verbesserte Interaktion ist die Aktivierung des Spracherkenners in Zusammenhang mit der Festlegung des zur Interaktion vorgesehenen Objektes.

Zur Aktivierung des Spracherkenners dient in der ersten Ausführungsvariante eine haptische Bedienhandlung M1, wie eine "Longpress"-Berührung und/oder eine "Doppelklick"-Berührung, und/oder eine "Drag-Geste" und/oder ein "2-Finger-Touch" auf einer Bedieneinrichtung.

In der zweiten Ausführungsvariante ist vorgesehen, dass der Spracherkenner des Sprachdialogsystems bereits zum Zeitpunkt des Erkennens einer "allgemeinen" gestischen Bedienhandlung M2 automatisch aktiviert wird.

Die beiden Ausführungsvarianten können einzeln oder in Kombination ausgeführt werden.

Ist der Spracherkenner aktiv können vom Nutzer 10 in der dritten Modalität M3 Sprachbefehle eingesprochen werden. Dabei kann das Verfahren so ausgeführt werden, dass der Spracherkenner nur für eine vorgebbare, definierte Zeitspanne aktiv ist, wobei die Zeitspanne für den Nutzer 10 auf der Anzeige- und Bedieneinrichtung 20, 60 dargestellt wird.

Sind alle Voraussetzungen erfüllt, erfolgt die Interaktion, welche als erste Ausführungsform, der "Anzeigeobjekt/Sprach-Interaktion" ohne Figuren jedoch mit den Bezugszeichen der später erläuterten zweiten Ausführungsform beschrieben wird, um den Zusammenhang zur zweiten Ausführungsform zu verdeutlichen.

Anschließend erfolgt die Beschreibung anhand der beigefügten Figuren mittels einer zweiten Ausführungsform, der "Anzeigeobjekt-Kontext/Sprach-Interaktion".

Erste Ausführungsform, die "Anzeigeobjekt/Sprach-Interaktion":

Das Verfahren wird in einer der Ausführungsformen, der "Anzeigeobjekt/Sprach-Interaktion", mit Hilfe einer haptischen und/oder gestischen Bedienhandlung M1, M2 und eines Sprachbefehls M3 wie folgt durchgeführt.

Zunächst wird das Objekt durch eine der Bedienhandlungen M1 und/oder M2 ausgewählt, wobei gleichzeitig und automatisch mit mindestens einer den beiden Bedienhandlungen der Spracherkenner gestartet wird.

Der Spracherkenner ist in der "Anzeigeobjekt/Sprach-Interaktion" ausschließlich auf die Erkennung von einem oder mehreren Verben eines im Spracherkenner eingeschränkten, hinterlegten Verb-Vokabulars ausgelegt. Da Verben leicht zu sprechen sind, ergibt sich eine intuitive Kombination von durch die Bedienhandlung M1 und/ oder M2 ausgewählten Objektes und einem mindestens ein Verb umfassenden Sprachbefehls M3. Diese Vorgehensweise entspricht den grundlegenden Funktions- und Vorgehensweisen von menschlicher Tätigkeit und Sprache, insbesondere einer Art Kindersprache, die besonderes intuitiv ist.

Zur Verdeutlichung der Interaktion werden nachfolgend dazu einige Beispiele genannt, die durch mindestens eine haptische Bedienhandlung M1 zur Festlegung des Objektes an einer Anzeige- und Bedieneinrichtung beispielsweise einem Touchdisplay oder Touchscreen eingeleitet werden. Die Festlegung des Objektes kann erfindungsgemäß, wie beschrieben, auch durch gestische Bedienhandlungen M2 oder durch eine Kombination der Bedienhandlungen M1, M2 eingeleitet werden.

Der Benutzer 10 berührt auf der Karte des Touchscreens 20 einen Ort oder ein POI-Icon und sagt gleichzeitig "hinfahren", "speichern", "anrufen" oder vorbeifahren".

Der Benutzer 10 schaut sich auf dem Touchscreens 20 seine Musik zum Beispiel über den Cover-Flow an. Er berührt ein Albumcover und sagt "spielen", "löschen", "kopieren" oder "merken"

Der Benutzer 10 hört HD Radio in den USA. Er berührt auf dem Touchscreens 20 die Titelanzeige des aktuellen Songs auf dem Display und sagt "get". Zu Hause bietet iTunes daraufhin die markierten Songs zum Kauf an.

Der Benutzer 10 sieht auf dem Touchscreens 20 seine Kontakte in Form von Fotos, berührt eines und sagt "anrufen", "mailen" oder "hinfahren"

Der Benutzer 10 sieht auf dem Display des Touchscreens 20, 60 eine Grafik seines Fahrzeugs, berührt den Kofferraum oder ein Fenster und sagt "schließen".

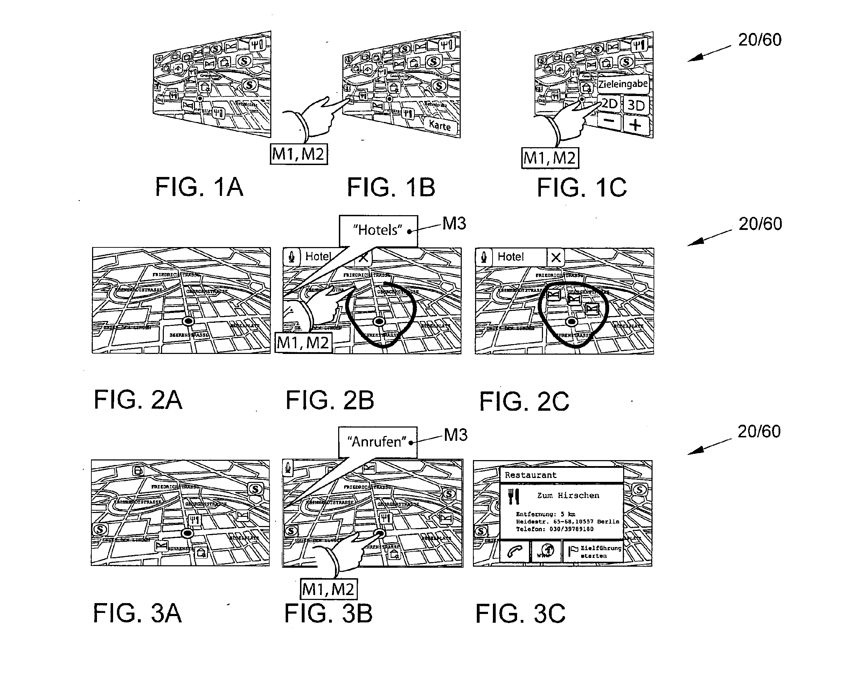

Zweite Ausführungsform, die "Anzeigeobjekt-Kontext/Sprach-Interaktion":
Die Erfindung in seiner zweiten Ausführungsform, der sogenannten "Anzeigeobjekt-Kontext/Sprach-Interaktion", wird anhand der Figuren 1A bis 9B erläutert.

Einem Nutzer, dem Fahrer oder Beifahrer 10, wird es auch hier ermöglicht ein Eingabesignal M verschiedener Modalitäten M1, M2, M3 einem Anzeige- und Bedienelement 20 und/oder einem Spracherkenner zuzuführen.

Zunächst erfolgt durch eine Bedienhandlung M1 und/oder M2, wie bereits zur ersten Ausführungsform beschrieben, die Festlegung des Objektes und gleichzeitig und automatisch mit der Festlegung des Objektes die Aktivierung des Spracherkenners. Beispielhaft sind zur Aktivierung des Spracherkenners Bedienhandlungen wie Drehen/Drücken oder dergleichen ausführbar oder es erfolgt, wie bereits zur ersten Ausführungsform zur Aktivierung des Spracherkenners in der ersten Ausführungsvariante beschrieben, eine haptische Bedienhandlung M1, eine "Longpress"-Berührung und/oder eine "Doppelklick"-Berührung, und/oder eine "Drag-Geste" und/oder einen "2-Finger-Touch" oder es ist in der zweiten Ausführungsvariante vorgesehen, dass der Spracherkenner des Sprachdialogsystems bereits zum Zeitpunkt des Erkennens einer "allgemeinen" haptischen Bedienhandlung M2 am Erfassungsmodul automatisch aktiviert wird.

In der zweiten Ausführungsform, der "Anzeigeobjekt-Kontext/Sprach-Interaktion", ist der zur Interaktion vorgesehene Sprachbefehl M3 eine Ein- oder Mehrwortvokabel aus einem eingeschränkten, kontextspezifischen Vokabular zu speziellen sinnvollen Aktionen des jeweils festgelegten Anzeigeobjektes. Diese kontextbezogene Ein- oder Mehrwortvokabel kann auch hier ein Verb und/oder ein Substantiv sein. Das Vokabular ist jedoch auf den jeweiligen Kontext zugeschnitten beziehungsweise eingeschränkt. Dadurch entsteht eine schnellere und einfachere Interaktion zwischen Nutzer und Systemarchitektur, wodurch in der zugehörigen Systemarchitektur Speicherplatz eingespart wird.

Die weitere Beschreibung erfolgt unter Bezugnahem auf die erfindungsgemäße Systemarchitektur, die dieses Verfahren ermöglicht.

Jeder der Modalitäten M1, M2, M3 ist eine entsprechende Benutzerschnittstelle zugeordnet, zum Beispiel ein Touchscreen 20 mit gegebenenfalls angeordneten Bedienelementen für die erste Modalität M1; eine Sensorik, insbesondere eine kapazitive Sensorik, für die zweite Modalität M2 zur Erfassung von gestischen Bedienhandlungen; ein Spracherkenner für die dritte Modalität M3 der Spracherkennung.

Zudem wird ein Informationsmanager angeordnet, der die Eingabesignale beziehungsweise Signalanteile der Modalitäten M1, M2, M3 synergistisch auswertet.

Die Ausgabesignale des Informationsmanagers werden einem Präsentationsmanager zugeführt, der die Benutzerschnittstelle zur Ausgabe von Anzeigen und Informationen über ein an das Anzeige- und Bedienelement beziehungsweise das Sprachausgabegerät des Spracherkenner darstellt, auf dem Ausgabesignale in Form von Grafikanimationen beziehungsweise Akustik dem Fahrer oder Beifahrer 10 zugeführt werden.

Der Präsentationsmanager entscheidet dabei in Abhängigkeit der von dem Informationsmanager übermittelten Signale, über die Art der Ausgabe und die Wahl der geeigneten Präsentationsmethode.

Eine Implementierung der adaptiven, multimodalen Benutzerschnittstellen, beispielsweise eines "Navigationssystems", wird unter Einbeziehung der Spracherkennung mit einer Benutzerschnittstelle des Spracherkenners, einer Gestenerkennung mit einer Benutzerschnittstelle - kapazitive Sensorik - und Erkennung einer gestischen Bedienhandlung an einer Benutzerschnittstelle eines Touchscreen-Interface 20, 60 als Anzeige- und Bedieneinrichtung beschrieben.

Die Detektion der Handbewegung und/oder - position bei einer Gestenerkennung M2 erfolgt mittels kapazitiver Näherungssensoren, die beispielsweise an den Ecken des Touchscreens 20 angebracht sind.

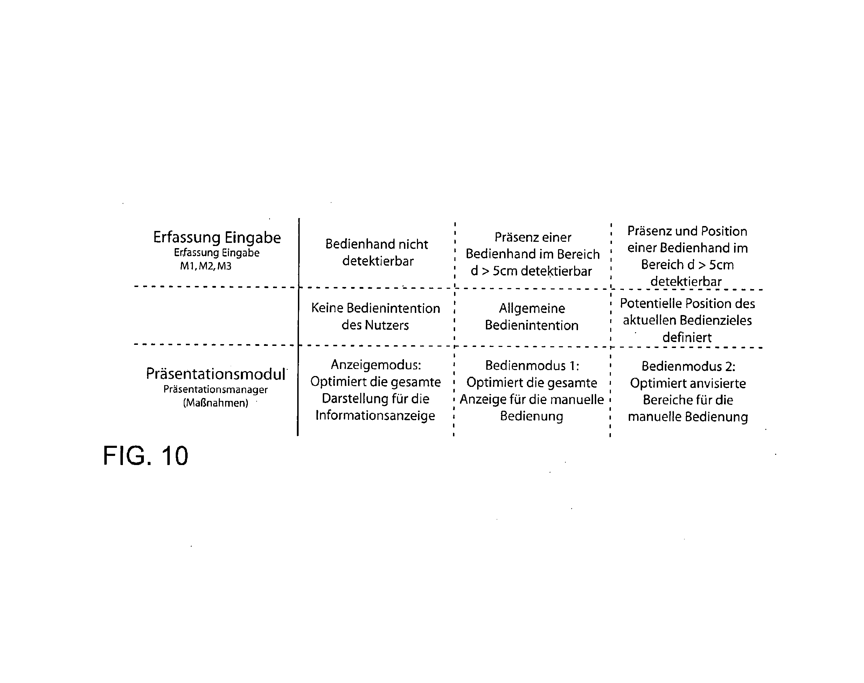

Wie die Figur 10 zeigt, wird eine definierte Annäherung an das als Touchscreen 20 ausgelegte Navigationsdisplay vom System ab einem Abstand von ca. 10 cm als generelle Bedienintention betrachtet.

Der Präsentationsmanager adaptiert daraufhin die von dem Informationsmanager erhalten Eingabesignale zur Informationsdarstellung auf dem Touchscreen 20 zugunsten einer verbesserten Bedienbarkeit der angebotenen Schaltflächen (beispielsweise POI-Icons) durch Skalierung und Einblendung zusätzlicher Bedienoptionen.

Die Tabelle in Figur 10 unterscheidet die Präsenz einer Bedienhand hinsichtlich des Vorhandenseins eines Eingabesignals und ordnet dieser jeweiligen Präsenz eine bestimmte Bedienintention zu, wobei zudem der Präsentationsmanager je nach Präsenz der Bedienhand in einen vorgebbaren Modus wechselt.

Wird eine Bedienhand nicht detektiert, so wird keine Bedienintention des Nutzers 10 erfasst und das Präsentationsmodul optimiert ausgehend von den im Informationsmanager insgesamt vorliegenden Daten die Darstellung für die Anzeige von Informationsgehalten, sogenannter Anzeigemodus.

Bereits ab einem Abstand von ca. 5 cm, also d ≥ 5 cm ist eine Präsenz im Bereich des Navigationsdisplays detektierbar, die als "allgemeine" Bedienintention erfasst wird.

Hierauf erfolgt über den Informationsmanager am Präsentationsmanager die Optimierung der gesamten Anzeige für eine mögliche manuelle Bedienung, sogenannter erster Bedienmodus.

Ab einer Distanz von ca. < 5 cm ergibt sich das konkrete operative Bedienziel aus der jeweiligen, vom Index-Finger des Nutzers 10 anvisierten Schaltfläche auf dem Touchscreen 20, 60. Die Präsenz und Position einer Bedienhand wird detektiert und die potentielle Position des aktuellen Bedienziels als Anzeigeobjekt definiert. Über den Informationsmanager erfolgt durch den Präsentationsmanager eine Optimierung des anvisierten Bereiches für die manuelle "Finger"-Bedienung, sogenannter zweiter Bedienmodus.

Die anvisierte optimierte Schaltfläche wird zusätzlich skaliert, so dass der Zielvorgang zum Betätigen der auf dem Touchscreen 20 dargestellten "Taste" nochmals vereinfacht wird.

Bei aktuellen auf Touchscreen 20 basierten Benutzerschnittstellen im Fahrzeug sind die Dimensionen der Schaltflächen meist auf ein ergonomisch akzeptables Minimum reduziert, um bei limitierter Displaygröße Platz für parallele Anzeigen von Informationen zu schaffen.

Durch den situativen Wechsel zwischen dem Anzeigemodus und dem ersten oder zweiten Bedienmodus kann die limitierte Anzeigefläche von Touchscreens 20 im Fahrzeug unter Annahme einer Bedienintention effizient sowohl für die Anzeige von Informationsgehalten in übersichtlichen Darstellungen als auch die Darstellung von speziellen Bedienflächen genutzt werden.

Am Beispiel der manuellen Interaktion mit POI-Icons in einer Navigationskarte auf einem Touchscreen 20, 60 ist dieses Verfahren exemplarisch implementiert, welches zunächst anhand der Figuren 1A bis 1C beschrieben wird.

Figur 1A zeigt ein Touchscreen 20, 60 eines Navigationssystems, bei dem eine Bedienhand noch nicht detektiert worden ist, so dass die Informationsanzeige im Anzeigemodus über den gesamten Touchscreen 20, 60 optimiert wird.

Bei allgemeiner Annäherung ("allgemeine" Bedienintention) der Bedienhand gemäß Figur 1 B wird die Größe der POI-Icons bereits skaliert. Hierbei werden Straßennamen, Streckeninformationen und andere Details zum Teil überdeckt, da sie für den Zeitraum der Bedienhandlung nicht relevant sind. Es erfolgt somit bereits eine Optimierung für die nachfolgende manuelle Bedienung in den ersten Bedienmodus.

Beim Anvisieren des "Indikators" - also des zur Interaktion ausgewählten Objektes - gemäß Figur 1C für die Bedienoption zur Manipulation der Kartenansicht werden diese an entsprechender Stelle eingeblendet, ohne dass der Nutzer eine Schaltfläche betätigen muss.

Diese in Figur 1C vorgenommene gestische Bedienhandlung M2 ruft den zweiten Bedienmodus hervor, bei dem die anvisierten Bereiche für die manuelle Bedienung optimiert werden.

Zur Spezifikation von Objekten, geometrischen Dimensionen und Positionen sowie zur Einstellung von Skalen (zum Beispiel für die Lautstärkeregelung) über den Touchscreen 20, 60 eignen sich ebenfalls haptische Eingaben und/oder gestische Zeigebewegungen.

Zur Eingabe von Namen, Begriffen und Befehlen ist meist die Sprache geeigneter.

Die sogenannte synergistische Multimodalität (Bedienhandlungen und Spracheingabe) ermöglicht neben kürzeren Bedienzeiten durch parallele Informationseingaben auch eine Reduktion von Bedienfehlern, da die Eingaben über eine Bedienmodalität jeweils zur Verifizierung der Eingaben der jeweils parallel genutzten Bedienmodalität beitragen können.

Zudem können Bedienelemente und Bedienschritte reduziert werden, indem zum Beispiel bei entsprechenden haptischen und/oder gestischen Interaktionen mit der Navigationskarte der Spracherkenner automatisch - anstatt über eine "Push-to-Talk"-Taste - aktiviert wird.

Befehle unter Einbeziehung räumlich-geometrischer Angaben, wie sie zum Beispiel bei der Interaktion mit Karten vorkommen, sind der häufigste Aufgabentyp für den Einsatz solcher synergistischen Systeme.

Eine exemplarische Implementierung demonstriert eine ortsbezogene multimodale Suche nach POI's in einer speziellen Themenkategorie, wie zum Beispiel "Hotels" oder "Restaurants", anhand der Figuren 2A bis 2C.

Hierbei spezifiziert der Nutzer die gesuchte-POI Kategorie per Sprache M3 und definiert gleichzeitig das spezielle Suchgebiet durch eine manuelle Zeigegeste M2 - zum Beispiel freies 'Einkreisen' des Suchgebiets - auf dem Touchscreen 20, 60.

Figur 2A zeigt den Touchscreen vor dem Sprachbefehl M3.

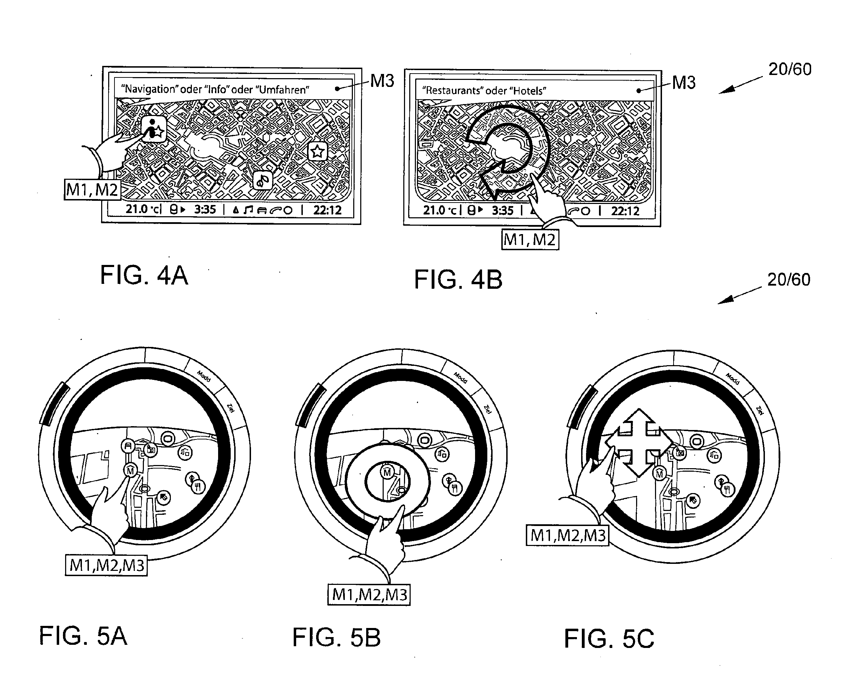

Gemäß den Figuren 2A bis 2C wird der Spracherkenner automatisch aktiviert, sobald das System den Beginn der Zeigegeste und/oder einer haptischen Bedienhandlung M1, M2 registriert. Der erkannte kontextbezogene Suchbegriff, beispielsweise "Hotels", wird auf dem Display 20 eingeblendet und bei Abschluss der Zeigegeste und/oder einer haptischen Bedienhandlung M1,M2 (siehe Figur 5B) werden auf der Karte innerhalb des angegebenen Suchgebiets die gefundenen POI's, hier die Hotels des speziellen Suchgebietes, angezeigt (Figur 2C)

Durch die Aktivierung der Spracherkennung M3 aus dem definierten Anwendungskontext der Navigationskarte heraus wird nur das im jeweiligen Anwendungskontext sinnvolle kontextbezogene und auf den Kontext eingeschränkte Vokabular für die Erkennung zugrunde gelegt und damit die Fehlerrate gering gehalten.

Eine weitere Anwendung für synergistisch-multimodale Eingaben im Navigationskontext ist in den Figuren 3A bis 3C dargestellt. Eine direkte Interaktion mit einem POI, ausgehend von Figur 3A, erfolgt folgendermaßen. Anstatt den gewünschten POI per Sprache - wie bei der beschriebenen Lösung zu den Figuren 2A bis 2C - zu spezifizieren (problematisch bei mehreren POI's der selben Kategorie) oder die gewünschte Aktion (zum Beispiel "Anrufen") rein manuell über ein Menü durch eine haptische Bedienhandlung M3 auszuwählen, dies erfordert längere Bedienzeiten und Blickabwendungen, kann der Nutzer den POI über eine Zeigegeste M2 (Figur 3B) auswählen und parallel dazu die gewünschte Aktion M3 per Sprache eingeben.

Auch hier wird für die Spracherkennung M3 nur das eingeschränkte, kontextbezogene Vokabular der Begriffe zur Steuerung einer POI-Aktion zugrunde gelegt, so dass auch in diesem Beispiel die Wahrscheinlichkeit von Fehlerkennungen gering gehalten wird. Über die Auswertung der zeitlichen und semantischen Synchronität der Eingaben M1, M2, M3 entscheidet das System, wie oben beschrieben, mit Hilfe der Auswertung, der sich gegebenenfalls hinsichtlich der Modalität M1, M2, M3 überlagernden Eingabesignale, über die jeweilige Anzeige des POI Menüs.

Bei erkanntem Sprachbefehl M3 wird die Aktion "Anrufen" direkt ausgeführt und das POI Menü, siehe Figur 3C, nicht aufgerufen. Die kontextbezogene Sprachinteraktion schließt die Verwendung von einzelnen Verben nicht aus.

Nur bei nicht erkanntem oder nicht erfolgtem Sprachbefehl wird das POI Menü, siehe Figur 3C, aufgerufen. Der Nutzer 10 kann nun erneut per Sprache M3 oder über den Touchscreen 20, 60 durch die Bedienhandlung M1 und/ oder M2 und/oder M3 die gewünschte Option auf dem dargestellten Menü gemäß Figur 3C angeben.

Anhand der Figuren 1A bis 3C wurde bereits gezeigt, dass die Erfassung solcher Eingaben großes Potential für die Anpassung des HMI's an die Bediensituation und somit für Komfort und Sicherheit in sich birgt.

Anhand der Figuren 4A bis 9B sollen weitere Anwendungsmöglichkeiten, die unter Nutzung des Verfahren beziehungsweise des Systemarchitektur ausführbar sind, beschreiben werden. Die Figuren 4A bis 9B verdeutlichen ebenfalls das Verfahren zur multimodalen Eingabe von Sprachbefehlen M3 sowie haptischen und/oder gestischen Bedienhandlungen M1, M2.

Auch hier wird davon ausgegangen, dass zumindest die von der Systemarchitektur und dem zugehörigen Verfahren zur gemeinsamen Verarbeitung erfassbaren Eingabesignale M1, M2, M3 verwendet werden.

Figur 4A zeigt bereits den ersten Bedienmodus, bei dem, wie bereits zu Figur 3 beschrieben, die Anzeigen für die manuelle Bedienung bereits optimiert worden ist. Es erfolgte bereits eine Festlegung und Spezifizierung eines Objektes an einer bestimmten Position entweder durch gestische Annäherung M2 an das Display 20, 60 oder durch eine haptische Toucheingabe M1 auf dem Display 20, 60. Hierbei kann der Spracherkenner bereits wieder geöffnet worden sein, während die Bedienhandlung M1, M2 die gestische Präsenz der Bedienhand und/oder die haptische Auswahl durch den Bedienfinger im Bereich des POI-Objektes erfasst.

Es erfolgt beispielsweise ein Öffnen des Spracherkenners beim Drücken M1 "Long-Press" auf das POI-Objekt.

Beide Varianten gestische und/oder haptische Aktivierung des Spracherkenners sind einzeln oder in Kombination möglich. Durch den Spracherkenner ist nun im Kontext zum ausgewählten POI die Eingabe eines Sprachbefehls möglich, der beispielsweise lautet "Navigation" oder "Info" oder "Umfahren".

Figur 4B zeigt wiederum die Möglichkeit der ortsspezifischen POI-Suche durch gestische Präsenz M2 einer Bedienhand im Bereich des Touchscreens 20, 60

Gegebenenfalls wird die Anzeige vorher gemäß der Beschreibung zu Figur 3 optimiert und es erfolgt eine kreisende Bewegung des Fingers als Bedienhandlung in der Modalität M2.

Gleichzeitig öffnet sich beispielsweise der Spracherkenner als weitere Benutzerschnittstelle oder es erscheinen POI-Button, wobei die POI-Suche mittels Spracheingabe weitergeführt wird, indem ein Sprachbefehl M3, beispielsweise "Restaurants" oder "Hotels", eingesprochen wird.

Nachfolgend werden anhand der Figuren 5A bis 5C weitere Beispiele beschrieben, die das Prinzip der multimodalen POI-Bedienung verdeutlichen sollen.

Gemäß Figur 5A zeigt der Nutzer 10 mit seinem Finger auf einen POI, wobei das als Ausgabemodul dienende Anzeige- und Bedienelement 60 in den ersten oder zweiten Bedienmodus wechselt. Der Nutzer 10 äußert parallel dazu ein Sprachkommando M3. Der Eingabebefehl beziehungsweise das Eingabesignal setzt sich somit aus einer Zeigegeste M2, und einer gesprochenen Information M3 als Eingabesignal zusammen.

Der Spracherkenner erkennt den oder die Sprachbefehl/e M3 und über die kapazitive Sensorik des Touchscreens 20, 60 werden parallel gestische Bedienhandlungen M2 erfasst.

Der Nutzer 10 führt beispielsweise in einer ersten Stufe wiederum eine Bedienhandlung M1 und M2 oder nur M2 (gestisch ohne Touchscreenberührung) zum gewünschten POI-Icon mit jeweils parallelem kontextbezogenen Sprachbefehl M3 beispielsweise "Information!" durch, so dass auf der Anzeige- und Bedieneinrichtung 60 durch einen multimodalen Eingabebefehl M1, M2, M3 oder M2, M3 oder M1, M3 mit Hilfe des Systems beispielsweise automatisch akustische oder grafische Animationen als Informationen zum "Museum für moderne Kunst" bereitgestellt werden.

Anschließend möchte der Nutzer 10 beispielsweise eine Telefonverbindung herstellen. Erführt beispielsweise wiederum die Bedienhandlung M1 und M2 oder nur M2 (beispielsweise gestische Ansteuerung ohne Touchscreenberührung) zum gewünschten POI-Icon durch und äußert jeweils einen parallelen Sprachbefehl M3, beispielsweise "Anrufen!". Der Eingabebefehl M3 wird durch den dem System zur Verfügung stehende Spracherkenner unter Zugrundelegung des eingeschränkten kontextbezogenen Vokabulars verifiziert und das System stellt automatisch eine Telefonverbindung zum "Museum für moderne Kunst" her.

Beispielsweise besteht auch die Möglichkeit durch Bedienhandlung M1 und M2 oder nur M2 (gestische Ansteuerung ohne Touchscreenberührung) M1, M2 auf den oder zum POI-Icon und parallele Spracheingabe M3, beispielsweise "Zielführung!" einzusprechen, um nach Auswertung der Eingabebefehle M über das Navigationssystem des Fahrzeuges die Zielführung zum "Museum für moderne Kunst" zu starten und über die Anzeige des das Anzeige- und Bedienelement 60 grafisch darzustellen.

Figur 5B zeigt die Bedienhandlung "Einkreisegeste" M2 auf einem Navigationsdisplay und es erfolgt wiederum beispielsweise ein paralleler Sprachbefehl M3 "Restaurants!". Dadurch erfolgt die Anzeige aller Restaurants in diesem eingekreisten Gebiet auf der Anzeige- und Bedieneinrichtung 60 dem Displays eines Navigationssystems.

In Figur 5C nimmt der Nutzer 10 beispielsweise eine Zeigegeste M2 und parallel dazu einen Sprachbefehl M3, beispielsweise "Zoom!", oder eine Zeigegeste M2 und einen Sprachbefehl M3 "Browse!" oder eine Zeigegeste 20 und beispielsweise einen Sprachbefehl M3 "Karte bewegen" vor. Auf der Anzeige- und Bedieneinrichtung 20, 60 des Navigationssystems erfolgt dann das entsprechende "Zoomen", "Scrollen" oder "Browsen" der Navigationskarte.

Für alle bereits beschriebenen Beispiele und die nachfolgenden Beispiele gilt, dass der kontextbezogene Sprachbefehl als Eingabesignal M3 nicht zwangsläufig parallel zum Eingabebefehl M1 und/oder M2 erfolgen muss. Denkbar ist auch das der Sprachbefehl M3 kurz vor oder nach dem weiteren Eingabebefehl M1 und/oder M2 erfolgt. Das System und Verfahren versucht eine koordinierte, multimodale Eingabe zu realisieren, die der natürlichen Handlungsweise des Nutzers 10 am meisten entspricht.

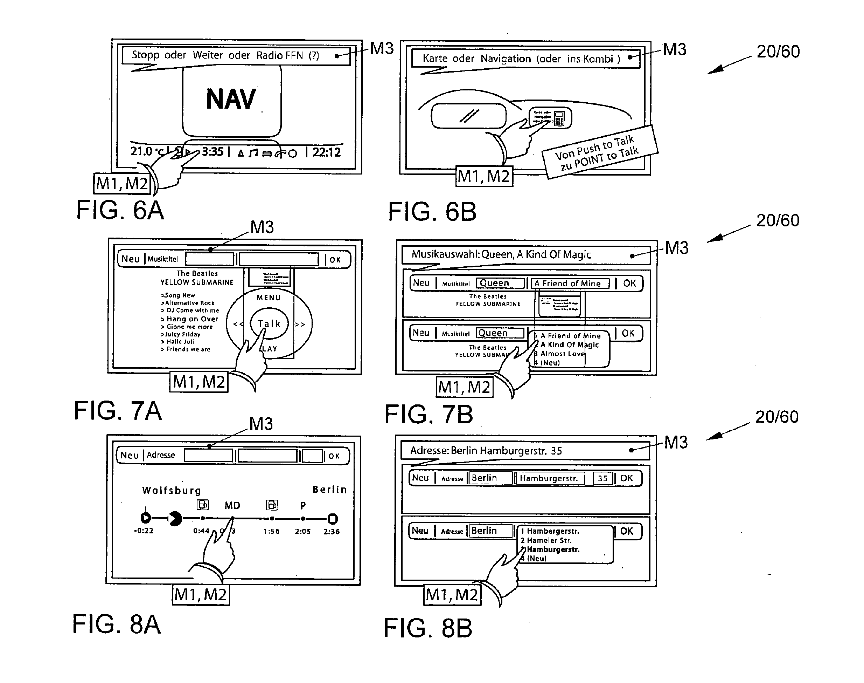

Weitere Beispiele der multimodalen Bedienbarkeit sind in den Figuren 6A und 6B dargestellt und werden nachfolgen noch näher beschrieben.

Gemäß den Figuren 6A und 6B wird zunächst dargestellt, dass sich durch Drücken und/oder Zeigen M1, M2 auf eine Präsentation eines Eingabemoduls 20 im ersten oder zweiten Bedienmodus - dazu Beschreibung Figur 10 - je nach Darstellung ein bestimmter Kontext eines Sprachbefehles M3 ergibt.

Die Systemarchitektur sortiert die anwendungsspezifischen Vokabularien zunächst vor und bietet durch Öffnen der Benutzerschnittstelle des Spracherkenners bestimmte Sprachbefehle M3, wie beispielsweise "Stop" oder "Weiter" oder "Radio FFM", in einem eingeschränkten anwendungsspezifischen beziehungsweise kontextspezifischen Zusammenhang an.

Das Öffnen des Spracherkenners erfolgt bei ausreichender Präsenz der Bedienhandlung M2 und/oder bei M1 "Press-Hold", wobei die zu sprechenden Befehle M3 auf der Anzeige- und Bedieneinrichtung 20, 60 sogar vorgegeben werden. Durch diese Lösung ist kein Umgreifen mehr zu einem beispielsweise am Lenkrad befindlichen "Push-To-Talk"-Button nötig.

Diese Lösung wird auch durch Figur 6B zusätzlich dargestellt. Sie zeigt, dass eine übersichtliche Applikation einer Präsentation auf einem Erfassungsmodul 20 erfolgt und bei entsprechender Annäherung M2 oder Drücken M1 "Press-Hold" wird der Spracherkenner geöffnet und beispielsweise ausgehend von einer Übersichtsdarstellung erfolgt die Anzeige des kontextbezogenen Sprachbefehls M3, wie beispielsweise "Karte" oder "Navigation" oder "ins Kombiinstrument (Kombi)". Durch diese Lösung führen die verschiedenen Modalitäten M1, M2, M3 zu einem eindeutigen, ausführbaren Befehl, der von dem System umgesetzt werden kann.

Wie die Figuren 7A und 7B zeigen ist die multimodale Eingabe auch in speziellen Anwendungen über Spracheingabe M3 beziehungsweise Touch-/Gestikbefehlen M1, M2 möglich. Beispielhaft sei hier die Musiktitelauswahl anhand eines dargestellten iPod's (Figur 10A) beziehungsweise einer anders gearteten Musiktitelauswahl-Darstellung gemäß Figur 10B erläutert. Durch eine annähernde Bedienhandlung M2 im ersten beziehungsweise zweiten Bedienmodus oberhalb eines Touch-Interface 20 wird beispielsweise ein "Automotive Click-Wheel" automatisch dargestellt und geöffnet, zudem wird der Spracherkennungsbaustein automatisch oder beispielsweise durch einen direkten "Touch-Befehl" M1 aktiviert, so dass der jeweilige Musiktitel, beispielsweise "A Kind of Magic" statt der Musiktitel "A Friend of Mine", wiederum entweder durch einen weiteren "Touch-Befehl" M1 oder durch einen Annäherungsbefehl M2 oder deren Kombination und/oder per erneuter Spracheeingabe M3 ausgewählt werden kann.

Auch hier ist wiederum ein separates Drücken eines "Push-To-Talk"-Button nicht nötig, da bereits der Spracherkenner durch Annäherung der Bedienhandlung M2 geöffnet oder durch Drücken M1 und auf den Touchscreen 20 (Figur 7A "Talk") aktiviert wird. Ein Umgreifen zu einem "Push-To-Talk"-Button entfällt. Das System stellt somit eine Neuerung von "Push-To-Talk" zu "Point-To-Talk" beziehungsweise "Touch-To-Talk" dar.

Bemerkt sei zudem, dass gegebenenfalls die Korrektur einzelner Auswahlen anhand der dargestellten Segmente des iPod's (Figur 10A) oder sich öffnender Bedienfelder (Figur 10B) wiederum per Touchscreen 20, also Touch-Bedienhandlung M1, und/oder per gestischer Annäherungsbedienhandlung M2 und/oder per Sprachbedienhandlung M3 ausführbar ist.

Analog zur eben beschriebenen Vorgehensweise, bei der Musiktitelauswahl beim iPod oder dergleichen, ist in den Figuren 8A und 8B die multimodale Zieleingabe anhand eines Navigations-Widget dargestellt.

Der Spracherkenner wird beispielsweise wiederum durch Annäherung/Zeigen M2 auf das Display 20, 60 geöffnet und anschließend erfolgt beispielsweise die Auswahl und Korrektur einzelner Segmente per Bedienhandlung M1 und/oder M2 und es erfolgt die Darstellung auf dem Touchscreen 20, 60.

Durch Öffnen des Spracherkennungsmoduls ist das jeweilige Ziel beziehungsweise die jeweilige Route (siehe beispielsweise Figur 8A) nun einsprechbar, so dass hier gemäß Figur 8A beispielsweise eine Routenanzeige Wolfsburg-Berlin erfolgt und die Eingabe und Korrektur eines Ziels dann gemäß Figur 8B wiederum entweder per Touch- Bedienhandlung M1 oder M1 und M2 und/oder nur durch korrigierenden Sprachbefehl M3 erfolgt, so dass beispielsweise ein missverständlicher kontextbezogener Sprachbefehl zum Beispiel "Hambergstraße" statt der gewünschten "Hamburgstraße" manuell per Bedienhandlung M1 oder M1, M2 oder wiederum per Sprachbefehl M3 korrigierbar ist.

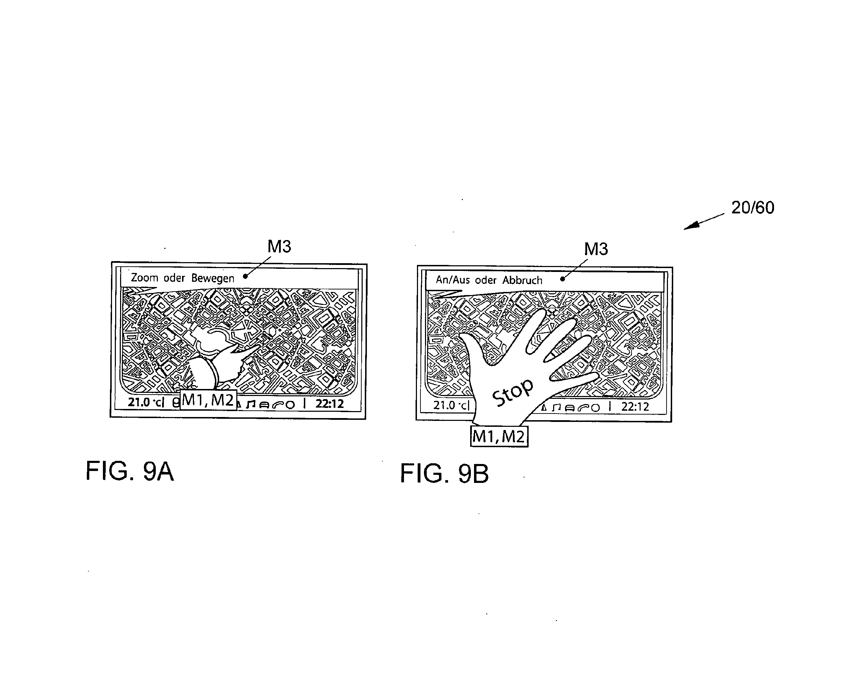

Die Figuren 9A und 9B zeigen noch die Möglichkeit der multimodalen Eingabe von Funktionszuweisungen beziehungsweise von Zuweisungen von Gesamtgesten. So ist beispielsweise gemäß Figur 9A, wie bereits schon zu Figur 5C beschrieben, das Bewegen einer Navigationskarte auf dem Touchscreen 20 nach Annäherung durch die Bedienhand durch einen gestischen Eingabebefehl M2 und entsprechendem parallelem oder nachfolgendem Sprachbefehl M3 "Zoom" oder "Bewegen" möglich.

Eine An-/Aus-Funktion oder eine Abbruchfunktion kann zudem beispielsweise einer Geste M2, wie beispielsweise der Handspreizung der gesamten Hand, zugeordnet werden. Dadurch kann im Zusammenhang mit einem Sprachbefehl M3 beispielsweise "An/Aus" oder "Abbruch" eine multimodale Bedienung zum Starten oder Beenden eines Systems realisiert werden.

Eine weitere Ergänzung des Systems ist durch die Integration von Kontextinformationen aus dem Fahrzeugsystem in Bezug auf die aktuelle Fahraufgabe möglich (zum Beispiel Geschwindigkeit, Straßenklasse, Verkehrsdichte, Assistenzniveau des Fahrzeugs), um eine Adaption der verfügbaren Anzeigefläche auf dem Touchscreen 20, 60 auf Basis der Beanspruchungssituation des Nutzers 10 zu realisieren.

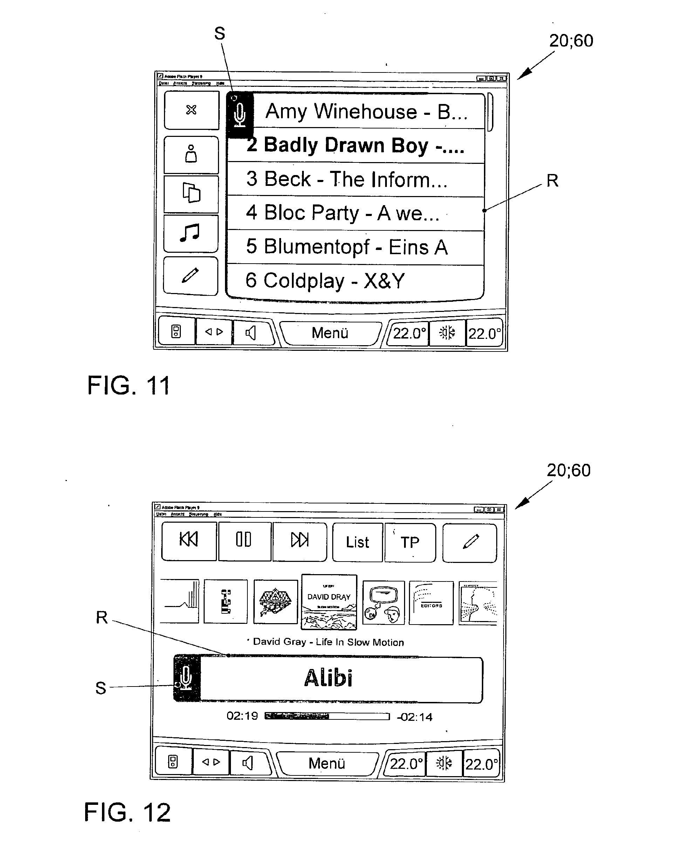

In den Figuren 11 bis 14 wird eine Anzeigemöglichkeit über den Status (aktiv/inaktiv) des Spracherkenners vorgestellt. Es wurde bereits beschrieben, dass für beide Ausführungsformen der "Anzeigeobjekt/Sprach-Interaktion" und der "Anzeigeobjekt-Kontext/Sprach-Interaktion" bevorzugt vorgesehen ist, dass der Spracherkenner des Sprachdialogsystems nach dessen Aktivierung nur für eine vorgebbare, definierte Zeitspanne aktiv ist. Innerhalb dieser Zeitspanne kann vom Nutzer ein Sprachbefehl M3 hinzugefügt werden.

In einer bekannten Variante zur Signalisierung für den Nutzer 10, ob der Spracherkenner aktiv oder inaktiv ist, erfolgt bei Aktivierung beziehungsweise Deaktivierung des Spracherkenners eine grafische Anzeige - ein sogenanntes "grafisches Feedback" - abseits des Interaktionsobjektes oder des zur Interaktion vorgesehenen Bereiches am oder im Anzeige- und Bedienelement 20, 60.

In der neuen Variante erfolgt das - "grafische Feedback" - nicht abseits des zur Interaktion vorgesehenen Objektes oder Bereiches, sondern am zur Interaktion vorgesehenen Objekt oder Bereich selbst. Hier muss auf oder an dem Anzeige- und Bedienelement 20, 60 kein separater Bereich für die Ausgabe eines Feedback über den Status des Spracherkenners mehr reserviert werden und das grafische Feedback steht für den Nutzer 10 vorteilhaft in direktem Zusammenhang mit dem zur Interaktion vorgesehenen Interaktionsobjekt oder dem Interaktionsbereich.

Der grundsätzliche Ablauf bei der Aktivierung und Deaktivierung des Spracherkenners im Zusammenhang mit dem grafischen Feedback ist folgender. In dem zur Interaktion vorgesehenen Bereich oder an einem zur Interaktion vorgesehenen Objekt wird die Aktivierung des Spracherkenners beispielsweise durch die bereits als eine der möglichen Alternativen beschriebene "Longpress-Berührung" vorgenommen. Dabei kann in dem zur Interaktion vorgesehenen Bereich oder Objekt auf dem Anzeige- und Bedienelement 20, 60 irgendein Punkt zur Aktivierung berührt werden, der dabei eine gewisse vorgebbare Zeit beibehalten werden muss. Zunächst wird in einer möglichen Kombination mit dem grafischen Feedback bei der "Longpress-Berührung" im "richtigen", also für die Aktivierung vorgesehenen Bereich oder bei ausreichend langer Berührung des Objektes ein "haptisches Feedback" erzeugt, beispielsweise eine Vibration am Finger des Bedieners. In dem Augenblick in dem die "Longpress-Berührung" als Auslösehandlung zum Öffnen des Spracherkenners angenommen wurde, erfolgt zusätzlich ein weiteres deutliches "haptisches Feedback" in Form einer clickartigen Vibration als signalartige Rückantwort an den Nutzer 10, dass die gewünschte Bedienhandlung erfolgreich war. Dieses deutliche "haptische Feedback" kann in einer weiteren Kombination mit einem parallel ausgelösten "akustischen Feedback" ausgeführt werden. Der Spracherkenner ist somit gestartet und der erfolgreiche Start wurde dem Nutzer somit haptisch und/oder akustisch signalisiert.

Bis der Spracherkenner aktiv ist, vergeht jedoch noch eine vorgebbare Zeitspanne, die für den Nutzer 10 als "grafisches Feedback" angezeigt wird. Um den Bereich beziehungsweise das Objekt herum beginnt für eine vorgebbare Zeit eine Art rahmenartiges Band zu laufen, bis ein Spracherkennersymbol S erscheint. Erst in diesem Augenblick ist der Spracherkenner aktiv, das heißt zur Entgegennahme von Sprachbefehlen M3 geöffnet und ein Sprachbefehl M3 kann eingesprochen werden. Dabei bestehen bei der Darstellung des grafischen Feedbacks verschiedene Möglichkeiten der Gestaltung.

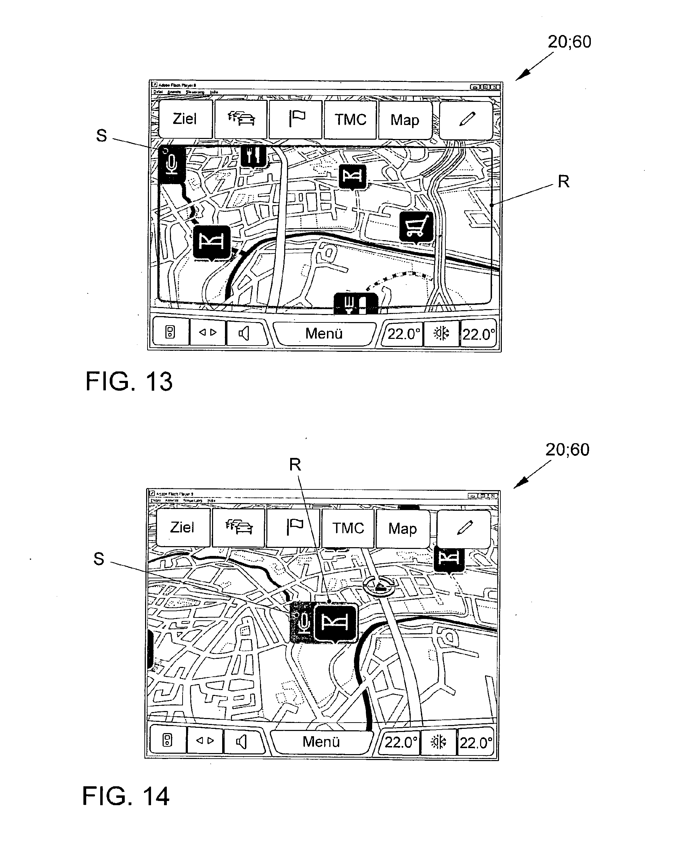

Beispielsweise beginnt das rahmenartige - vorzugsweise gegenüber dem Anzeige- und Bedienelement 20, 60 in seiner Leuchtkraft und/oder farbig abgesetzte - Band in der rechten, unteren Ecke eines Bereiches oder eines Objektes zu laufen und läuft in einer bevorzugten Ausgestaltung in zwei Richtungen zur linkeren, oberen Ecke einen Rahmen R bildend, wobei in dem Augenblick in dem die linke, obere Ecke erreicht ist und der Rahmen R geschlossen ist, genau dort das Spracherkennersymbol S erscheint. Siehe Figuren 11 und 13.

Eine andere mögliche Ausgestaltung ist, dass der umlaufende einen Rahmen R um das Objekt oder den Bereich bildende Band in der Mitte der vertikalen Ränder des Bereiches oder des Objektes nach beiden Seiten - in einer gleichen oder einer unterschiedlichen Geschwindigkeit - läuft, sich auf der gegenüberliegenden Seite schließt und somit einen Rahmen R bildet und das Spracherkennersymbol S auf der gegenüberliegenden Seite in der Mitte des dortigen vertikalen Randes erscheint. Siehe Figuren 12 und 14.

Das umlaufende Band kann in einer weiteren Ausgestaltung von irgendeinem frei wählbaren Randpunkt des Bereiches oder Objektes ausgehend beginnen sich auszubilden und nur in eine Richtung oder zwei Richtungen laufen, wobei in dem Augenblick, in dem sich der dadurch gebildete Rahmen R schließt, das Spracherkennersymbol S anzeigt wird, wonach der Spracherkenner aktiv gestellt ist.

Die Deaktivierung erfolgt beispielsweise jeweils ausgehend von dem Punkt an dem das Band ursprünglich begonnen hatte den Rahmen R auszubilden in Richtung des Spracherkennersymbol S, indem das Band in eine Richtung oder in beide Richtungen laufend wieder ausgeblendet wird, wobei der Spracherkenner dann inaktiv gestellt ist, sobald der Rahmen R und das Spracherkennersymbol S wieder vollständig verschwunden ist.

Im Moment des Erscheinens des Spracherkennersymbols S kann der Sprachbefehl M3 eingesprochen werden. Der Rahmen R öffnet sich nach einer vorgebbaren Zeitspanne unabhängig davon, ob eine Sprachbefehl M3 eingesprochen wurde oder nicht nach Erscheinen des Spracherkennersymbols S unter Beibehaltung des Spracherkennersymbols S beispielsweise wieder an der Stelle, an der das Band begonnen hatte den Rahmen R auszubilden. Das umlaufende Band baut sich somit in Richtung des Spracherkennersymbols S wieder ab, wonach das Spracherkennersymbol S in dem Augenblick verschwindet, in dem der Rahmen R vollständig verschwindet oder bei Verblieben eines Rahmens R, die farbige Gestaltung nicht mehr sichtbar oder die zuvor erhöhte Leuchtkraft zurückgesetzt worden ist. Der Spracherkenner ist dann wieder inaktiv.

Anhand von vier Beispielen und den Figuren 11 bis 14 soll die Erfindung noch näher erläutert werden.

In Figur 11 ist diese Lösung anhand einer Playlist, die in dem Anzeige- und Bedienelement 20, 60 bereits aufgerufen worden ist, dargestellt. Beispielsweise ist die Playlist mit den Titeln 1 bis 6 in einer Grundansicht noch nicht von einem Rahmen R umgeben und das Spracherkennersymbol S wird noch nicht angezeigt. Durch eine "Longpress-Berührung" auf das Anzeige- und Bedienelement 20, 60 erfolgt die auslösende Bedienhandlung zur Aktivierung des Spracherkenners, beispielsweise in Kombination mit einem "haptischen" und/oder "akustischen" Feedback, zur Signalisierung der erfolgreichen Bedienhandlung des Nutzers 10, wie oben bereits grundsätzlich beschrieben. Ausgehend von einer rechten, unteren Ecke hat sich der Rahmen R in der linken, oberen Ecke geschlossen und das Spracherkennersymbol S erscheint. Dem Nutzer wird somit das "grafische Feedback" bereitgestellt, so dass er genau erkennen kann, wann der Spracherkenner aktiv ist. Es erfolgt die Spracheingabe M3 unter Berücksichtigung der ersten beziehungsweise zweiten Ausführungsform mit einem in der Zwischenzeit für die Interaktion mit dem ausgewählten Objekt oder Bereich vorgesehenen, beschränkten Vokabular. In Figur 11 hat der Nutzer 10 beispielsweise den Titel 2 "Badly Drawn Boy" eingesprochen. Die Sortierung der Titel in der Anzeige- und Bedienvorrichtung 20, 60 erfolgt derart, dass der ausgewählte Titel 2 hervorgehoben wird und sich auf der Anzeige- und Bedienvorrichtung 20, 60 in einer vorteilhaften Ausgestaltung weiter in den zentralen Sichtbereich des Anwenders bewegt. Darunter werden in einer Weiterbildung dieser Ausgestaltung im Rahmen des eingeschränkten Vokabulars beispielsweise phonetisch ähnlich klingende Titel, beispielsweise der Titel 3 "Beck-The Inform...", Titel 4 und 5 und so weiter sortiert. Bereits nach Einblendung des Spracherkennersymbols S läuft das den Rahmen R bildende Band ausgehend von der Stelle, an der sich Rahmen R durch das Band anfangs gebildet hatte (wie in der Figur 11 dargestellt) zurück in Richtung des Spracherkennersymbols S und bei Erreichen des Symbols S wird der Spracherkenner inaktiv und das Symbol S wird wieder ausgeblendet.

In Figur 12 ist diese Vorgehensweise am Beispiel eines Media-Players dargestellt. In der Grundansicht ist beispielsweise eine Albumansicht "David Grey" und ein von diesem Album laufender Titel "Alibi" sowie dessen Laufzeit und noch verbleibende Laufzeit in einer Titelanzeige dargestellt. Die nachfolgende Beschreibung ist analog auf die Auswahl eines Albums oberhalb des Bereiches der Titelanzeige im Bereich der angezeigten Albumcover übertragbar.

Zum Wechsel eines Titels aus dem bereits vorab ausgewählten Album erfolgt wiederum beispielhaft eine "Longpress-Berührung" gegebenenfalls in Kombination mit einem haptischen und/oder akustischen Feedback für den Nutzer 10 auf den Bereich der Titelanzeige. Von der Mitte ausgehend am rechten Rand des Bereiches schließt sich das umlaufende Band in der Mitte des linken Randes des so entstehenden Rahmens R und das Spracherkennersymbol S erscheint am linken Rand. Der Spracherkenner ist aktiv und zur Spracheingabe bereit. Es erfolgt die Spracheingabe M3 unter Berücksichtigung der ersten beziehungsweise zweiten Ausführungsform mit einem auf die Interaktion mit dem ausgewählten Objekt beziehungsweise vorgesehenen Bereich, beschränkten Vokabular. Beispielsweise hat nach Figur 12 der Benutzer den Sprachbefehl "Alibi" eingesprochen, wodurch aus dem entsprechenden Album dieser Titel gespielt wird. Anschließend öffnet sich der umlaufende Rahmen wieder in der Mitte des rechten Randes und verschwindet in Richtung des Spracherkennersymbols S, welches nach Erreichen des Symbols S unter inaktiv Schaltung des Spracherkenners wieder ausgeblendet wird.

Figur 13 zeigt den grafischen Dialog beziehungsweise das "grafische Feedback" zur Statusanzeige des Spracherkenners am ausgewählten Interaktionsobjekt am Beispiel einer POI-Kategorieauswahl auf einem Navigationsdisplay. In Figur 13 ist diese Lösung anhand eines Navigationsdisplays, das in dem Anzeige- und Bedienelement 20, 60 aufgerufen worden ist, dargestellt. Beispielsweise sind auf dem Navigationsdisplay verschiedene POI-Kategorien, wie "Hotels" oder "Restaurants" oder "Einkaufsmöglichkeiten" in einer Grundansicht dargestellt, die noch nicht von einem Rahmen R umgeben sind und das Spracherkennersymbol S noch nicht angezeigt wird. Durch eine "Longpress-Berührung" auf das Anzeige- und Bedienelement 20, 60 erfolgt der Start des Spracherkenners - wiederum beispielsweise in Kombination mit einem haptischen und/oder akustischen Feedback - wie oben grundsätzlich beschrieben. Ausgehend von einer rechten, unteren Ecke hat sich der Rahmen R in der linken, oberen Ecke zunächst geschlossen und das Spracherkennersymbol S erscheint. Dem Nutzer wird somit ein grafisches Feedback bereitgestellt, mittels dem er genau erkennen kann, wann der Spracherkenner aktiv ist und er die Spracheingabe M3 vornehmen kann.

Es erfolgt die Spracheingabe M3 unter Berücksichtigung der ersten beziehungsweise zweiten Ausführungsform mit einem auf die Interaktion mit dem ausgewählten Bereich vorgesehenen, beschränkten Vokabular. In Figur 13 hat der Benutzer beispielsweise die Kategorie "Hotel" eingesprochen. Die Anzeige des ausgewählten POI's erfolgt in der bereits erwähnten Ausgestaltung derart, dass das ausgewählte POI hervorgehoben wird und sich - wie in Figur 14 dargestellt - selbsttätig weiter in den zentralen Sichtbereich des Nutzes 10 bewegt.

Anschließend läuft der Rand (wie in der Figur 11 dargestellt) den Rahmen R auflösend, ausgehend von dem Punkt an dem sich der Rahmen R anfangs gebildet hatte, wieder zurück in Richtung des Spracherkennersymbols S und bei Erreichen des Symbols S wird der Spracherkenner inaktiv und das zugehörige Symbol S wird wieder ausgeblendet.

In Figur 14 ist der grafische Dialog zur Statusanzeige des Spracherkenners am ausgewählten Interaktionsobjekt am Beispiel des einzelnen, mittels Sprachdialog ausgewählten POI's aus Figur 13 auf einem Navigationsdisplay erläutert. Will der Nutzer 10 noch Informationen zu dem ausgewählten Hotel erhalten, Kontakt mit dem Hotel unter Nutzung des Sprachdialogsystems aufnehmen oder auf andere Weise interagieren geht er wieder wie folgt vor. Es erfolgt eine "Longpress-Berührung" auf das POI als Objekt selbst. Er erhält wiederum gemäß den beschrieben alternativen oder in Kombination vorliegenden Ausführungsmöglichkeiten ein haptisches und/oder akustisches Feedback, welches signalisiert, dass die Eingabe zum Start des Spracherkenners erfolgreich war. Beispielsweise von der Mitte ausgehend am rechten Rand des POI-Objektes schließt sich der umlaufende Rand R in der Mitte des linken Randes R.

Der so entstehende Rahmens R und das Spracherkennersymbol S erscheinen. Der Spracherkenner ist aktiv. Es erfolgt die Spracheingabe M3 unter Berücksichtigung der ersten beziehungsweise zweiten Ausführungsform mit einem auf die Interaktion mit dem ausgewählten Objekt vorgesehenen, beschränkten Vokabular. Beispielsweise spricht der Benutzer den Sprachbefehl M3 "Hinfahren", wodurch das Hotel als Ziel in die Routenplanung des Navigationssystems übernommen wird. Oder er äußert den Sprachbefehl M3 "Anrufen", wonach automatisch eine Telefonverbindung zum Hotel hergestellt wird. Anschließend öffnet sich der Rahmen R wieder, wobei sich der Rahmen R bevorzugt in der Mitte des rechten Randes des Objektes öffnet und der Rahmen R durch ein beidseitig in Richtung des Spracherkennersymbols S laufendes - den Rahmen R auflösendes - Band wieder verschwindet. Das Spracherkennersymbol S wird wieder ausgeblendet und der Spracherkenner ist wieder inaktiv.

### Bezugszeichenliste

- 10: Nutzer
- 20: erfassende Anzeige- und Bedieneinrichtung
- 60: ausgebende Anzeige- und Bedieneinrichtung
- M: Eingabesignal
- M1: erste Modalität [haptische Bedienhandlung]
- M2: zweite Modalität [gestische Bedienhandlung]
- M3: dritte Modalität [Sprache]
- d: Abstand
- S: Spracherkennersymbol
- R: Rahmen/Rand

## Patentansprüche

1. Verfahren zur multimodalen Informationseingabe und/oder Anpassung der Anzeige einer Anzeige- und Bedieneinrichtung, die ein Display umfasst, in einem Kraftfahrzeug, welches Eingabesignale unterschiedlicher Modalität erfasst, die über die mindestens eine Bedieneinrichtung einem Spracherkenner zugeführt werden, wodurch als Ausgabesignal eine gewünschte Funktion und/oder Anzeige ausgelöst wird, die auf der Anzeige- und Bedieneinrichtung angezeigt und/oder per Sprachausgabe ausgegeben wird,
wobei gestische Eingabesignale (M2) oder eine Kombination aus haptischen und gestischen Eingabesignalen (M1, M2) auf oder an der Anzeige- und Bedieneinrichtung (20, 60) zu einer Auswahl eines zur Interaktion vorgesehenen Objektes und zur Aktivierung des Spracherkenners führen, wobei durch die gestischen Eingabesignale (M2) oder die Kombination der haptischen und gestischen Eingabesignale (M1, M2) eine Festlegung und Spezifizierung des Objekts an einer bestimmten Position auf dem Display durch gestische Annäherung an das Display erfolgt und wobei eine gestische Präsenz einer Bedienhand im Bereich des Objekts erfasst wird, und mit der Auswahl des Objektes und/oder Aktivierung des Spracherkenners in Abhängigkeit des ausgewählten Objektes eine Einschränkung des zur Interaktion vorgesehenen Vokabulars erfolgt, wonach dem ausgewählten Objekt als Informationseingabe und/oder zur Anpassung der Anzeige über den Spracherkenner ein zu dem ausgewählten Objekt zugehöriger Sprachbefehl (M3) des eingeschränkten Vokabulars hinzugefügt wird.

2. Verfahren nach Anspruch 1,
**dadurch gekennzeichnet, dass**
von der Anzeige- und Bedieneinrichtung (20) als Eingabesignal (M1, M2) und als Aktivierungssignal für den Spracherkenner
• als erste Modalität (M1) haptische Eingabesignale des Nutzers (10), wie Drehen, Drücken, Berühren, Schalten von Bedienelementen, und
• als zweite Modalität (M2) gestische Eingabesignale des Nutzers (10) erfasst werden.

3. Verfahren nach Anspruch 1,
**dadurch gekennzeichnet, dass**
der Spracherkenner des Sprachdialogsystems zum Zeitpunkt des Erkennens einer gestischen Eingabesignale erzeugenden Bedienhandlung mit einer "allgemeinen" Bedienintention automatisch aktiviert wird und erst anschließend die Festlegung des zur Interaktion vorgesehenen Anzeigeobjektes erfolgt, so dass sichergestellt ist, dass im Falle einer vorzeitigen Spracheingabe eine Sprachauswertung durch den Spracherkenner erfolgt.

4. Verfahren nach Anspruch 1,
**dadurch gekennzeichnet, dass**
der Spracherkenner des Sprachdialogsystems nach dessen Aktivierung nur für eine vorgebbare, definierte Zeitspanne aktiv ist, innerhalb der von dem Nutzer (10) ein Sprachbefehl (M3) hinzugefügt werden kann, wobei die Aktivierung beziehungsweise Deaktivierung des Spracherkenners durch eine grafische Anzeige - "grafischer Feedback"-am zur Interaktion vorgesehenen Bereich oder Objekt selbst erfolgt.

5. Verfahren nach Anspruch 1,
**dadurch gekennzeichnet, dass**
der hinzugefügte Sprachbefehl (M3) eine Ein- oder Mehrwort-Vokabel ist.

6. Verfahren nach Anspruch 1,
**dadurch gekennzeichnet, dass**
der Sprachbefehl (M3) unmittelbar nach Erkennung durch den Spracherkenner auf dem Anzeige- und Bedienelement (20) für eine vorgebbare, definierte Zeitspanne eingeblendet wird.

7. Verfahren nach einem der Ansprüche 2 bis 4 ,
**dadurch gekennzeichnet, dass**
die Aktivierung beziehungsweise Deaktivierung des Spracherkenners mittels der grafischen Anzeige "grafisches Feedback" am Anzeige- und Bedienelement (20, 60) am zur Interaktion vorgesehenen Bereich oder Objekt und/oder über ein haptisches und/oder akustisches Signal "haptisches und/oder akustisches Feedback" signalisiert wird, wobei die zur Verfügung stehende vorgebbare Zeitspanne zur Eingabe des Sprachbefehls (M3) nach der Aktivierung des Spracherkenners im Anzeige- und Bedienelement (20, 60) am zur Interaktion vorgesehenen Bereich oder Objekt selbst grafisch angezeigt wird.

8. Verfahren nach Anspruch 1,
**dadurch gekennzeichnet, dass**
bei Eingabe eines Sprachbefehls, der nicht zum festgelegten zur Interaktion vorgesehenen Anzeigeobjekt passt, eine grafische und/oder akustische Anzeige beziehungsweise Signalisierung erfolgt.

9. Verfahren nach Anspruch 1,
**dadurch gekennzeichnet, dass**
ein der Anzeige- und Bedieneinrichtung (60) vorgeschalteter Präsentationsmanager in Abhängigkeit der Eingabesignale (M1, M2, M3) über die Art der Ausgabe und die Wahl der geeigneten Präsentationsmethode entscheidet.

10. Verfahren nach mindestens einem der Ansprüche 1 bis 5,
**dadurch gekennzeichnet, dass**
über die Anzeige- und Bedieneinrichtung (20) eine Bedienintention der zweiten Modalität (M2) in Abhängigkeit der Entfernung einer Bedienbewegung von der Anzeige- und Bedieneinrichtung (20), insbesondere einem Touchscreen, eingegeben wird und ein gestisches Eingabesignal (M2) erfasst wird, so dass in Abhängigkeit der gestischen Bedienbewegung ein situativer Wechsel zwischen einem Anzeigemodus und mindestens einem Bedienmodus der Anzeige- und Bedieneinrichtung (60) realisiert wird.

11. Verfahren nach Anspruch 10,
**dadurch gekennzeichnet, dass**
die Anzeige- und Bedieneinrichtung (20, 60) eine Bedienhandlung im Bereich d ≥ einem vorgebbaren Abstand, insbesondere d ≥ 5 cm, detektiert, so dass der Informationsmanager eine "allgemeine" Bedienintention erkennt, wobei der Präsentationsmanager die Anzeige der Anzeige- und Bedieneinrichtung (20, 60) im gesamten Bereich zur verbesserten Bedienung "erster Bedienmodus" optimiert.

12. Verfahren nach Anspruch 10,
**dadurch gekennzeichnet, dass**
die Anzeige- und Bedieneinrichtung (20) eine Bedienhandlung im Bereich d < einem vorgebbaren Abstand, insbesondere d < 5 cm, detektiert, so dass der Informationsmanager eine "potentielle anvisierte" Bedienintention eines ausgewählten Objektes erkennt, wobei der Präsentationsmanager die Anzeige- und Bedieneinrichtung (20, 60) zur verbesserten Bedienung der "potentiell anvisierte" Objekte im anvisierten Anzeigebereich "zweiter Bedienmodus" optimiert.

13. Systemarchitektur zur multimodalen Informationseingabe und Anpassung einer Anzeige,
wobei die Systemarchitektur Mittel umfasst, die konzipiert sind, ausgehend von multimodalen Interaktionen eines Nutzers, dessen Eingabesignale über eine, der jeweiligen Modalität zugeordnete Benutzerschnittstelle über eine Anzeige- und Bedieneinrichtung (20, 60), die ein Display umfasst, zu erfassen und einem Spracherkenner zuzuführen,
wobei zur Auswertung der Eingabesignale ein Informationsmanager angeordnet ist, welcher konzipiert ist,
in Abhängigkeit der Eingabesignale einem Präsentationsmanager Ausgabesignale zu übergeben,
die dem Nutzer auf einem dem Präsentationsmanager nachgeschalteten Anzeige- und Bedienelement und/oder dem Spracherkenner bereitgestellt werden,
die Eingabesignale der verschiedenen Modalitäten (M1, M2, M3) synergistisch zu erfassen und den Präsentationsmanager ausgehend von den erhaltenen Eingabesignalen (M1, M2, M3) anzusteuern,
wobei der Präsentationsmanager konzipiert ist, der Anzeige- und Bedieneinrichtung (20, 60) und/oder dem Spracherkenner in Abhängigkeit der Eingabesignale (M1, M2, M3) vorbereitete Ausgabesignale bereitzustellen,
wobei die Systemarchitektur Mittel umfasst, die konzipiert sind, durch gestische Eingabesignale (M2) oder eine Kombination aus haptischen und gestischen Eingabesignalen (M1, M2) auf oder an der Anzeige- und Bedieneinrichtung (20, 60) ein zur Interaktion vorgesehenes Objekt auszuwählen und den Spracherkenner zu aktivieren,
wobei durch die gestischen Eingabesignale (M2) oder die Kombination der haptischen und gestischen Eingabesignale (M1, M2) eine Festlegung und Spezifizierung des Objekts an einer bestimmten Position auf dem Display durch gestische Annäherung an das Display durchgeführt wird und wobei eine gestische Präsenz einer Bedienhand im Bereich des Objekts erfasst wird, und mit der Auswahl des Objekts und/oder Aktivierung des Spracherkenner in Abhängigkeit Abhängigkeit des ausgewählten Objekts eine Einschränkung des zur Interaktion vorgesehenen Vokabulars erfolgt, wonach dem ausgewählten Objekt als Informationseingabe und/oder zur Anpassung der Anzeige über den Spracherkenner ein zu dem ausgewählten Objekt zugehöriger Sprachbefehl (M3) des eingeschränkten Vokabulars hinzugefügt wird.

14. Systemarchitektur nach Anspruch 13,
**dadurch gekennzeichnet, dass**
die Eingabesignale (M1, M2) erfassende Anzeige- und Bedieneinrichtung (20, 60) das Display mit zugehörigen Bedienelementen oder ein Touchdisplay mit zugehörigen Bedienelementen und zugeordneter kapazitiver Sensorik ist.

15. Systemarchitektur nach Anspruch 13,
**dadurch gekennzeichnet, dass**
die Ausgabesignale ausgebende Anzeige- und Bedieneinrichtung (20, 60) das Display oder ein Touchdisplay ist.

## Claims

1. Method for multimodal information input and/or customization of the display of a display and operator control device, which comprises a display, in a motor vehicle that acquires input signals having different modality that are supplied via the at least one operator control device to a voice recognition unit, as a result of which the output signal initiated is a desired function and/or display that is displayed on the display and operator control device and/or output by means of voice output, wherein gestural input signals (M2) or a combination of haptic and gestural input signals (M1, M2) on or at the display and operator control device (20, 60) result in selection of an object that is provided for interaction and in activation of the voice recognition unit, wherein the gestural input signals (M2) or the combination of haptic and gestural input signals (M1, M2) stipulate and specify the object at a particular position on the display by virtue of gestural approach to the display and wherein a gestural presence of an operating hand in the area of the object is sensed, and the selection of the object and/or activation of the voice recognition unit on the basis of the selected object prompts restriction of the vocabulary provided for interaction, on the basis of which a voice command (M3) from the restricted vocabulary, which voice command is associated with the selected object, is added to the selected object as information input and/or for the purpose of customizing the display via the voice recognition unit.

2. Method according to Claim 1,
**characterized in that**
the display and operator control device (20) acquires, as an input signal (M1, M2) and as an activation signal for the voice recognition unit,
• haptic input signals from the user (10), such as rotation, pushing, touch, switching of operator control elements, as first modality (M1), and
• gestural input signals from the user (10) as second modality (M2).

3. Method according to Claim 1,
**characterized in that**
the voice recognition unit of the voice dialogue system is automatically activated at the instant of recognition of an operator control action, which produces gestural input signals, with a "general" operator control intention and only then is the display object that is provided for interaction stipulated, so that there is the assurance that voice evaluation is performed by the voice recognition unit in the event of early voice input.

4. Method according to Claim 1,
**characterized in that**
the voice recognition unit of the voice dialogue system, after having been activated, is active only for a prescribable, defined period of time within which the user (10) can add a voice command (M3), wherein the voice recognition unit is activated and/or deactivated by a graphical display - "graphical feedback" - on the area or object itself that is provided for interaction.

5. Method according to Claim 1,
**characterized in that**
the added voice command (M3) is a single-word or multi-word vocable.

6. Method according to Claim 1,
**characterized in that**
the voice command (M3) is shown on the display and operator control element (20) for a prescribable, defined period of time immediately after recognition by the voice recognition unit.

7. Method according to one of Claims 2 to 4, **characterized in that**
the activation and/or deactivation of the voice recognition unit is signalled by means of the graphical display "graphical feedback" on the display and operator control element (20, 60) on the area or object provided for interaction and/or by means of a haptic and/or audible signal "haptic and/or audible feedback", wherein the available prescribable period of time for input of the voice command (M3) after activation of the voice recognition unit is graphically displayed in the display and operator control element (20, 60) on the area or object itself that is provided for interaction.

8. Method according to Claim 1,
**characterized in that**
input of a voice command that does not fit the stipulated display object provided for interaction prompts a graphical and/or audible display or signalling.

9. Method according to Claim 1,
**characterized in that**
a presentation manager connected upstream of the display and operator control device (60) takes the input signals (M1, M2, M3) as a basis for deciding about the type of output and the choice of suitable presentation method.

10. Method according to at least one of Claims 1 to 5, **characterized in that**
the display and operator control device (20) is used to input an operator control intention of the second modality (M2) on the basis of the distance of an operator control movement from the display and operator control device (20), particularly a touchscreen, and a gestural input signal (M2) is acquired, so that the gestural operator control movement is seen as a basis for producing a situational change between a display mode and at least one operator control mode of the display and operator control device (60).

11. Method according to Claim 10,
**characterized in that**
the display and operator control device (20, 60) detects an operator control action in the area d ≥ a prescribable interval, particularly d ≥ 5 cm, so that the information manager recognizes a "general" operator control intention, wherein the presentation manager optimizes the display of the display and operator control device (20, 60) in the whole area for improved "first operator control mode" operator control.

12. Method according to Claim 10,
**characterized in that**
the display and operator control device (20) detects an operator control action in the area d < a prescribable interval, particularly d < 5 cm, so that the information manager recognizes a "potential planned" operator control intention for a selected object, wherein the presentation manager optimizes the display and operator control device (20, 60) for improved operator control of the "potentially planned" objects in the planned "second operator control mode" display area.

13. System architecture for multimodal information input and customization of a display, wherein the system architecture comprises means that are designed to take multimodal interactions of a user as a basis for acquiring the input signals therefrom via a user interface, which is associated with the respective modality, via a display and operator control device (20, 60) that comprises a display and to supply said input signals to a voice recognition unit, wherein an information manager is arranged for the purpose of evaluating the input signals, said information manager being designed
to take the input signals as a basis for transferring output signals to a presentation manager, said output signals being provided for the user on a display and operator control element, which is connected downstream of the presentation manager, and/or on the voice recognition unit,
to synergistically acquire the input signals from the various modalities (M1, M2, M3), and
to activate the presentation manager on the basis of the input signals (M1, M2, M3) obtained, wherein the presentation manager is designed
to provide the display and operator control device (20, 60) and/or the voice recognition unit with prepared output signals on the basis of the input signals (M1, M2, M3),
wherein the system architecture comprises means that are designed
to use gestural input signals (M2) or a combination of haptic and gestural input signals (M1, M2) on or at the display and operator control device (20, 60) to select an object that is provided for interaction and to activate the voice recognition unit,
wherein the gestural input signals (M2) or the combination of haptic and gestural input signals (M1, M2) stipulate and specify the object at a particular position on the display by virtue of gestural approach to the display
and wherein a gestural presence of an operating hand in the area of the object is sensed,
and the selection of the object and/or activation of the voice recognition unit on the basis of the selected object prompts restriction of the vocabulary provided for interaction, on the basis of which a voice command (M3) from the restricted vocabulary, which voice command is associated with the selected object, is added to the selected object as information input and/or for the purpose of customizing the display via the voice recognition unit.

14. System architecture according to Claim 13, **characterized in that**
the display and operator control device (20, 60) acquiring input signals (M1, M2) is the display with associated operator control elements or a touch display with associated operator control elements and associated capacitive sensors.

15. System architecture according to Claim 13, **characterized in that**
the display and operator control device (20, 60) outputting output signals is the display or a touch display.

## Revendications

1. Procédé d'introduction multimodale d'informations et/ou d'adaptation de l'affichage d'un dispositif d'affichage et de commande d'un véhicule automobile, qui comporte un écran qui saisit des signaux d'introduction de différentes modalités,
les signaux étant amenés à une reconnaissance vocale par le ou les dispositifs de commande, suite à quoi une fonction souhaitée et/ou un affichage souhaité qui sont affichés sur le dispositif d'affichage et de commande et/ou sont délivrés par sortie vocale sont déclenchés comme signal de sortie,
des signaux gestuels d'introduction (M2) ou une combinaison de signaux tactiles et de signaux gestuels d'introduction (M1, M2) sur le dispositif d'affichage et de commande (20, 60) entraînant la sélection d'un objet prévu pour interaction et l'activation de la reconnaissance vocale,
les signaux gestuels d'introduction (M2) ou la combinaison de signaux tactiles et de signaux gestuels d'introduction (M1, M2) entraînant une définition et une spécification de l'objet en une position définie de l'écran par approche gestuelle de l'écran,
la présence gestuelle de la main de l'opérateur au niveau de l'objet étant saisie et, avec la sélection de l'objet et/ou l'activation de la reconnaissance vocale, une restriction du vocabulaire prévu pour l'interaction ayant lieu en fonction de l'objet sélectionné,
suite à quoi une commande vocale (M3) du vocabulaire restreint, associée à l'objet sélectionné, est ajoutée par l'intermédiaire de la reconnaissance vocale à l'objet sélectionné en tant qu'introduction d'information et/ou pour l'adaptation de l'affichage.

2. Procédé selon la revendication 1, **caractérisé en ce que** le dispositif d'affichage et de commande (20) saisit comme signal d'entrée (M1, M2) et comme signal d'activation de la reconnaissance vocale :
comme première modalité (M1), des signaux tactiles d'introduction de l'utilisateur (10), par exemple une rotation, une poussée, un contact, ou la commutation d'éléments de commande et
comme deuxième modalité (M2), des signaux gestuels d'introduction par l'utilisateur (10).

3. Procédé selon la revendication 1, **caractérisé en ce qu'**à l'instant de la reconnaissance d'une manipulation de commande formant des signaux gestuels d'introduction, la reconnaissance vocale du système de dialogue vocal est activée automatiquement avec une intention "générale" de commande, suivie par la définition de l'objet à afficher prévu pour l'interaction, de manière à garantir qu'une évaluation vocale est réalisée par la reconnaissance vocale en cas d'introduction vocale précoce.

4. Procédé selon la revendication 1, **caractérisé en ce qu'**après son activation, la reconnaissance vocale du système de dialogue vocal n'est activée que pendant une durée définie et prédéterminée au cours de laquelle une commande vocale (M3) peut être ajoutée par l'utilisateur (10), l'activation ou la désactivation de la reconnaissance vocale s'effectuant par un affichage graphique - "rétroaction graphique" - dans la zone ou l'objet proprement dit prévus pour l'interaction.

5. Procédé selon la revendication 1, **caractérisé en ce que** la commande vocale ajoutée (M3) est un vocable à un ou plusieurs mots.

6. Procédé selon la revendication 1, **caractérisé en ce qu'**après sa détection par la reconnaissance vocale la commande vocale (M3) est injectée directement sur l'élément d'affichage et de commande (20) pour une durée définie et prédéterminée.

7. Procédé selon l'une des revendications 2 à 4, **caractérisé en ce que** l'activation ou la désactivation de la reconnaissance vocale sont signalées au moyen de l'affichage graphique "rétroaction graphique" sur l'élément d'affichage et de commande (20, 60) sur la zone ou l'objet prévus pour l'interaction et/ou par l'intermédiaire d'un signal tactile et/ou acoustique "rétroaction tactile et/ou acoustique", la durée prédéterminée disponible pour l'introduction de la commande vocale (M3) après l'activation de la reconnaissance vocale étant affichée sur l'élément d'affichage et de commande (20, 60), graphiquement sur la zone ou l'objet proprement dit prévus pour l'interaction.

8. Procédé selon la revendication 1, **caractérisé en ce qu'**un affichage ou une signalisation graphique et/ou acoustique ont lieu lors de l'introduction d'une commande vocale qui ne s'adapte pas à l'objet d'affichage défini prévu pour l'interaction.

9. Procédé selon la revendication 1, **caractérisé en ce qu'**un gestionnaire de présentation raccordé en amont du dispositif d'affichage et de commande (60) décide du type de sortie et de la sélection de la méthode de présentation appropriée en fonction des signaux introduits (M1, M2, M3).

10. Procédé selon au moins l'une des revendications 1 à 5, **caractérisé en ce qu'**une intention de commande selon la deuxième modalité (M2) est introduite par l'intermédiaire du dispositif d'affichage et de commande (20) en fonction de la distance d'un déplacement de commande du dispositif d'affichage et de commande (20), en particulier d'un écran tactile, et un signal gestuel d'introduction (M2) est saisi de sorte qu'en fonction du déplacement gestuel de commande, un changement de situation entre un mode d'affichage et au moins un mode de commande du dispositif d'affichage et de commande (60) est réalisé.

11. Procédé selon la revendication 10, **caractérisé en ce que** le dispositif d'affichage et de commande (20, 60) détecte une manipulation de commande dans une zone d ≥ une distance prédéterminée, en particulier d ≥ 5 cm, de telle sorte que le gestionnaire d'information détecte une intention "générale" de commande, le gestionnaire de présentation optimisant l'affichage du dispositif d'affichage et de commande (20, 60) dans toute la zone en vue d'améliorer la commande selon le "premier mode de commande".

12. Procédé selon la revendication 10, **caractérisé en ce que** le dispositif d'affichage et de commande (20) détecte une manoeuvre de commande dans une zone d < une distance prédéterminée, en particulier d < 5 cm, de telle sorte que le gestionnaire d'information détecte une intention "potentielle envisagée" de commande d'un objet sélectionné, le gestionnaire de présentation optimisant le dispositif d'affichage et de commande (20, 60) en vue d'améliorer la commande des objets "potentiellement envisagés" dans la zone d'affichage envisagée selon le "deuxième mode de commande".

13. Architecture d'un système d'introduction multimodale d'information et d'adaptation d'un affichage, l'architecture du système comprenant des moyens conçus pour, partant d'interactions multimodales d'un utilisateur, saisir ses signaux d'introduction par l'intermédiaire d'une interface d'utilisateur associée à chaque modalité, par l'intermédiaire d'un dispositif d'affichage et de commande (20, 60) qui comporte un écran, et pour les amener à une reconnaissance vocale,
un gestionnaire d'information étant prévu pour évaluer les signaux d'introduction et étant conçu pour, en fonction des signaux d'introduction, transmettre à un gestionnaire de présentation des signaux de sortie qui sont délivrés à l'utilisateur sur un élément d'affichage et/ou de commande la reconnaissance vocale, pour saisir de manière synergique les signaux d'introduction (M1, M2, M3) selon différentes modalités et pour commander le gestionnaire de présentation à partir des signaux d'introduction (M1, M2, M3) obtenus,
le gestionnaire de présentation étant conçu pour délivrer au dispositif d'affichage et de commande (20, 60) et/ou à la reconnaissance vocale des signaux de sortie préparés en fonction des signaux d'introduction (M1, M2, M3),
l'architecture du système comprenant des moyens conçus pour sélectionner un objet prévu pour interaction par des signaux gestuels d'introduction (M2) ou une combinaison de signaux tactiles et de signaux gestuels d'introduction (M1, M2) sur le dispositif d'affichage et de commande (20, 60) et activer la reconnaissance vocale,
une détermination et une spécification de l'objet en une position définie de l'affichage étant exécutées par approche gestuelle de l'affichage par des signaux gestuels d'introduction (M2) ou la combinaison des signaux tactiles et des signaux gestuels d'introduction (M1, M2),
la présence gestuelle de la main de l'opérateur au niveau de l'objet étant saisie et, avec la sélection de l'objet et/ou l'activation de la reconnaissance vocale, une restriction du vocabulaire prévu pour l'interaction ayant lieu en fonction de l'objet sélectionné,
suite à quoi une commande vocale (M3) du vocabulaire restreint, associée à l'objet sélectionné, est ajoutée par l'intermédiaire de la reconnaissance vocale à l'objet sélectionné en tant qu'introduction d'information et/ou pour l'adaptation de l'affichage.

14. Architecture de système selon la revendication 13, **caractérisée en ce que** le dispositif d'affichage et de commande (20, 60) saisissant les signaux d'introduction (M1, M2) est formé de l'écran et des éléments de commande associés, d'un écran tactile et de ses éléments de commande associés ou d'un ensemble de capteurs capacitifs associés.

15. Architecture de système selon la revendication 13, **caractérisée en ce que** le dispositif d'affichage et de commande (20, 60) délivrant les signaux de sortie est l'écran ou un écran tactile.
